Europäisches Patentamt

European Patent Office

Office européen des brevets

(19)

(11) **EP 1 398 895 A2**

(12) ## EUROPEAN PATENT APPLICATION

(43) Date of publication:
**17.03.2004   Bulletin 2004/12**

(51) Int Cl.⁷: **H04B 10/18**

(21) Application number: **03020432.5**

(22) Date of filing: **11.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority:  **13.09.2002  JP 2002268894**

(71) Applicant: **FUJITSU LIMITED
Kawasaki-shi, Kanagawa 211-8588 (JP)**

(72) Inventors:
• **Nabeyama, Yoshio, Fujitsu Kyushu Digital
Fukuoka-shi Fukuoka 812-0011 (JP)**
• **Nakajima, Isao
Hamamatsu-shi Shizuoka 431-3125 (JP)**

(74) Representative: **HOFFMANN - EITLE
Patent- und Rechtsanwälte
Arabellastrasse 4
81925 München (DE)**

(54)    **Chromatic dispersion compensating apparatus and controlling method of the same**

(57)     A chromatic dispersion compensating apparatus, including a chromatic dispersion compensating module having a spectral unit receiving an input light and generating an output light having a predetermined wavelength, a light returning unit designed for the predetermined wavelength to return the output light to the spectral unit, and a position changing unit changing a relative position between the spectral unit and the light returning unit; a storing unit storing predetermined position controlling amounts of the position changing unit, the position controlling amounts being used to generate a chromatic dispersion value for a certain wavelength; and a position controlling unit operating the position changing unit based on one of the position controlling amounts in the storing unit corresponding to the predetermined wavelength of the output light and the chromatic dispersion value.

**FIG. 5**

EP 1 398 895 A2

## Description

CROSS-REFERENCE TO RELATED APPLICATIONS

This application claims priority to Japanese patent application number 2002-268894, filed Sep. 13, 2002, in Japan, and which is incorporated herein by reference.

BACKGROUND OF THE INVENTION

1. Field of the Invention

The present invention relates to control of a chromatic dispersion compensating module utilizing a virtually imaged phased array (VIPA) as a spectroscope and particularly to compensation of chromatic dispersion value and improvement of loss characteristic.

2. Description of the Related Art

An example of conventional technology that compensates for chromatic dispersion using the VIPA is described in Japanese Patent Application No. 2000-511655, which returns, to the VIPA, the light output from the VIPA through the reflection by a mirror.

According to the technology described in the Japanese Patent Application Publication No. 2001-58947, there is provided a mirror having a shape that provides almost a constant chromatic dispersion value, independent of each constituent wavelength, to the light Output from the VIPA, and also gives different wavelength dispersion to the substantially perpendicular direction to the angular dispersion direction of the VIPA.

With the above conventional technology, it is possible to easily obtain the necessary corrective chromatic dispersion value, which is almost constant in the wavelength band used.

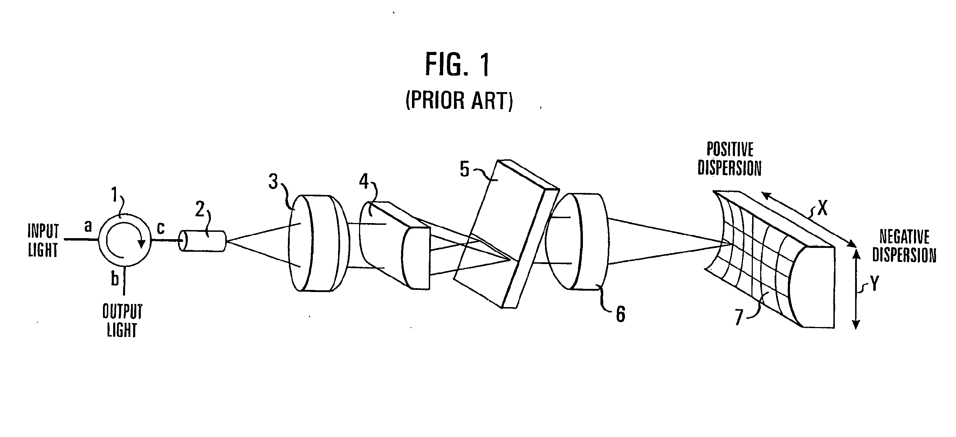

FIG. 1 is a diagram for describing an example of a basic structure of a conventional VIPA-type chromatic dispersion compensating module (VIPA-DCM).

In FIG. 1, an input light input from a port (a) of a circulator 1 is output from a port (b) and is input to a light inputting/outputting port 2.

This input light is converted to a collimated light with collimation lens 3 and is focused, with a line focus lens 4, on the plane on the light emitting side of a glass plate 5, that is, on the plane opposite to the line focus lens 4.

The input light input to the glass plate 5 is emitted little by little from the plane on the light emitting side while it is widened through multiple reflections within the glass plate 5. The light emitted from the glass plate 5 exhibits behavior similar to that of emitting light from a staircase type diffraction grating. Because this behavior is imaged as a virtual diffraction grating, the apparatus having such a structure is referred to as a virtually imaged phased array (VIPA).

The light having wavelength $\lambda$ emitted from the VIPA is propagated in the direction that satisfies the interference condition of formula (1).

$$2nd\cos\phi = m\lambda \qquad (1)$$

Here, d and n respectively designate thickness and refractive index of the glass plate 5, $\phi$ designates the interference direction in the glass plate 5, and m designates the interference order.

The VIPA has a very large interference order value to obtain a large angular dispersion and therefore it operates as a spectroscope having excellent performance.

Considering one wavelength of the light spectrally output from the VIPA, the intensified light satisfying the interference condition is focused on a three-dimensional mirror 7 allocated at the rear side of a focus lens 6, and the light is returned to the position that is the same as the emitting position or to a different position depending on the reflection angle that is determined by the shape of the three-dimensional mirror 7.

Because a time difference is generated for each wavelength when the light is coupled again with an optical fiber, that is, when the light is returned to the inputting/outputting port 2, due to the difference in wavelengths at the light emitting position and the light returning position, chromatic dispersion is generated, and the structure of FIG. 1 operates as a chromatic dispersion compensating module.

The three-dimensional mirror 7 has a shape that gives a different chromatic dispersion value to the input lights having equal wavelength in the X-axis direction and an almost equal chromatic dispersion value for the wavelength band of the input light in the Y-axis direction.

Accordingly, there is provided a chromatic dispersion compensating module that can generate chromatic dispersion of a predetermined value for the wavelength band of the input light and also change the chromatic dispersion value by moving the three-dimensional mirror 7 in the X-axis direction.

When the VIPA-type chromatic dispersion compensating module is designed using the fixed design values of refractive index n, thickness d, and interference direction $\phi$ of the glass plate 5, this VIPA-type chromatic dispersion compensating module may be used for a plurality of wavelengths satisfying formula (1).

On the other hand, because the three-dimensional mirror 7 is designed to have a shape obtained by solving a differential equation including an inclination of the mirror as the differentiation amount, considering a particular wavelength (hereinafter referred to as the "design wavelength") among a plurality of wavelengths satisfying formula (1), different chromatic dispersion values are generated, even when a mirror having the same shape is used, if it is used for a wavelength that satisfies formula (1 ) but is different from the design wavelength.

That is, when the light emitted from the VIPA is focused on the same position in the X-axis direction of the three-dimensional mirror 7, the chromatic dispersion value generated at the design wavelength is different from the chromatic dispersion value generated at another wavelength satisfying formula (1 ).

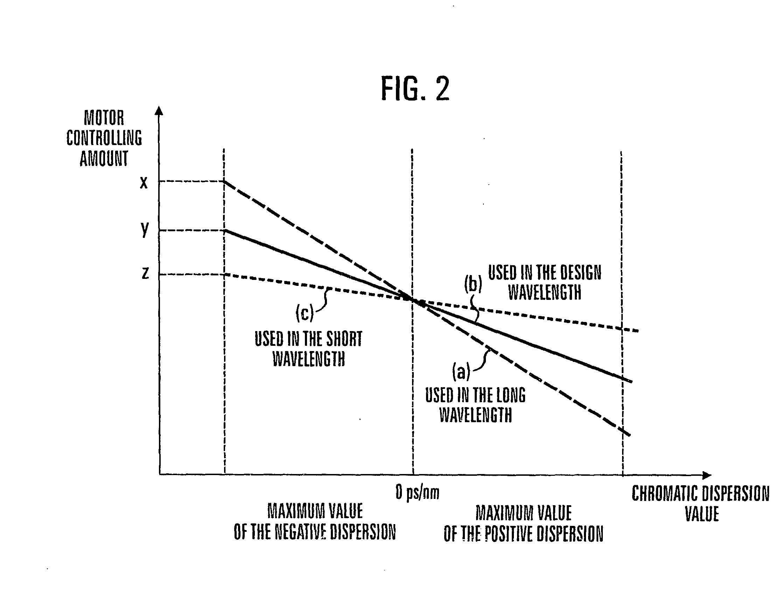

FIG. 2 is a diagram illustrating an example of the relationship between motor controlling amount and chromatic dispersion value at the wavelength used for the VIPA-type chromatic dispersion compensating module.

In FIG. 2, the motor controlling amount may be varied when a motor is used to move the three-dimensional mirror 7 in the X-axis direction and corresponds to the position of the three-dimensional mirror 7 in the X-axis direction.

FIG. 2 illustrates the relationship between the motor controlling amount and the chromatic dispersion value for the following cases: (a) a wavelength that is longer than the design wavelength is used, (b) a wavelength that is equal to the design wavelength is used, and (c) a wavelength that is shorter than the design wavelength is used. For example, regarding the motor controlling amount to generate the maximum negative dispersion, the controlling amount x when the wavelength (a) is used is larger than the controlling amount y for the design wavelength (b), but the controlling amount z when the wavelength (c) is used is smaller than the controlling amount y.

As described above, when equal chromatic dispersion values are generated, the motor controlling amount, that is, the focusing position on the X-axis of the three-dimensional mirror 7, must be changed depending on the wavelength used.

Moreover, the VIPA- type chromatic dispersion compensating module has a filter characteristic, that is, a loss characteristic depending on the wavelength used, but when the module is used at a predetermined wavelength, the filter characteristic is changed in accordance with the chromatic dispersion value when it is attempted to obtain a predetermined chromatic dispersion value by moving the three-dimensional mirror 7 as described above.

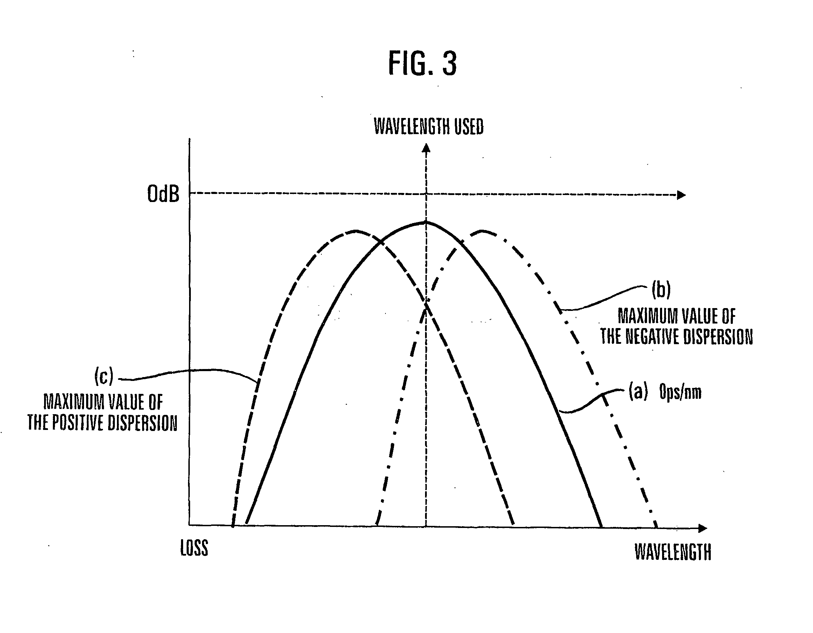

FIG. 3 illustrates an example of the relationship between filter characteristic and chromatic dispersion value.

FIG. 3 illustrates the filter characteristics for the following conditions: (a) the chromatic dispersion value is 0 ps/nm, (b) the negative dispersion is the maximum, and (c) the positive dispersion is the maximum.

In the case of (a) in FIG. 3, loss at the wavelength used is almost the minimum. On the other hand, in the cases (b) and (c) in FIG. 3, loss at the wavelength used is larger than loss at the wavelength in the condition (a) and such loss becomes maximum depending on the chromatic dispersion value used.

SUMMARY OF THE INVENTION

An aspect of the present invention is to provide a VIPA-type chromatic dispersion compensating module, which changes a chromatic dispersion value by changing the relative position between the VIPA and a light returning device, that provides, with a simplified method, a controlling amount for changing the relative position corresponding to a required chromatic dispersion value at a particular wavelength used.

Another aspect of the present invention is to provide a VIPA-type chromatic dispersion compensating module that minimizes loss of signal when the module generates a required chromatic dispersion value at a particular wavelength used.

Additional aspects and/or advantages of the invention will be set forth in part in the description that follows and, in part, will be obvious from the description, or may be learned by practice of the invention.

To achieve the above and/or other aspects of the present invention, there is provided a chromatic dispersion compensating module having a spectral unit receiving an input light and generating an output light having a predetermined wavelength, a light returning unit designed for the predetermined wavelength to return the output light to the spectral unit, and a position changing unit changing a relative position between the spectral unit and the light returning unit; a storing unit storing predetermined position controlling amounts of the position changing unit, the position controlling amounts being used to generate a chromatic dispersion value for a certain wavelength; and a position controlling unit operating the position changing unit based on one of the position controlling amounts in the storing unit corresponding to the predetermined wavelength of the output light and the chromatic dispersion value.

The storing unit stores predetermined temperatures of the spectral unit, and the chromatic dispersion compensating apparatus further includes a heating unit heating the spectral unit; a temperature detecting unit detecting a temperature of the spectral unit; and a temperature controlling unit controlling the heating unit based on one of the temperatures stored in the storing unit corresponding to the predetermined wavelength of the output light and the chromatic dispersion value to reduce signal loss.

Further, the chromatic dispersion compensating apparatus includes a heating unit heating the spectral unit; a light branching unit branching the output light output from the spectral unit; a light intensity measuring unit measuring an intensity of the branched output light; and a temperature controlling unit controlling the heating unit to provide a maximum light intensity as measured by the light intensity measuring unit.

The spectral unit generates the output light having a signal light with a first wavelength and a monitor light with a second wavelength and an angular dispersion the same as that of the signal light, and the chromatic dispersion compensating apparatus further includes a heating unit heating the spectral unit; a light extracting unit extracting the monitor light; a light intensity measuring unit measuring an intensity of the extracted light; and a temperature controlling unit controlling the heating unit to provide an approximately maximum light intensity as measured by the light intensity measuring unit.

The spectral unit has a virtually imaged phased array (VIPA) with a plurality of passage areas for receiving and outputting light, receives the input light having a plurality of continuous wavelengths within the passage areas, and performs multiple reflections of the input light to form, through self-interference, output light comprising component lights that are spatially distinguished from one another, and thereby disperses the output light at different output angles, depending on each constituent wavelength, in a substantially linear dispersing direction.

The chromatic dispersion compensating apparatus further includes a light returning unit having a lens focusing the output light formed with the VIPA and a mirror that returns the focused output light to the lens through reflection and causes the lens to return the reflected output light to the VIPA, thereby outputting the reflected output light from the VIPA via the passage areas by multiple reflections within the VIPA, and forming in a shape that provides an approximately constant wavelength dispersion to the output light from the VIPA independent of each constituent wavelength for the angular dispersion direction of the VIPA, and provides different wavelengths in a substantially perpendicular direction to the angular dispersion direction of the VIPA.

To achieve the above and/or other aspects of the present invention, there is provided a controlling method of a chromatic dispersion compensating apparatus including a chromatic dispersion compensating module having a spectral unit receiving an input light and generating an output light having a predetermined wavelength, a light returning unit designed for the predetermined wavelength to return the output light to the spectral unit, and a position changing unit changing a relative position between the spectral unit and the light returning unit, the controlling method including designating the predetermined wavelength of the output light and a chromatic dispersion value; obtaining a controlling amount of the position changing unit corresponding to the designated wavelength and the designated chromatic dispersion value; and operating the position changing unit based on the obtained controlling amount.

These, together with other aspects and/or advantages that will be subsequently apparent, reside in the details of construction and operation as more fully hereinafter described and claimed, reference being had to the accompanying drawings forming a part thereof, wherein like numerals refer to like parts throughout.

BRIEF DESCRIPTION OF THE DRAWINGS

These and other aspects and/or advantages of the invention will become apparent and more readily appreciated from the following description of the preferred embodiments, taken in conjunction with the accompanying drawings, of which:

FIG. 1 is a diagram illustrating an example of the basic structure of a conventional VIPA-type chromatic dispersion compensating module;

FIG. 2 is a diagram illustrating the relationship between a motor controlling amount and a chromatic dispersion value in each wavelength used in the VIPA-type chromatic dispersion compensating module of FIG. 1;

FIG. 3 is a diagram illustrating the relationship between a filter characteristic and a chromatic dispersion value;

FIG. 4 is a diagram illustrating an example of a system to which a chromatic dispersion compensating apparatus of the present invention is applied;

FIG. 5 is a diagram illustrating the chromatic dispersion compensating apparatus according to a first embodiment of the present invention;

FIG. 6 is a diagram illustrating a structure of a VIPA-DCM according to the first embodiment of the present invention;

FIG. 7 is a diagram illustrating an example of data stored in memory of the present invention;

FIG. 8 is a diagram illustrating the chromatic dispersion compensating apparatus according to a second embodiment of the present invention;

FIG. 9 is a diagram illustrating a structure of the VIPA-DCM according to the second embodiment of the present invention;

FIG. 10 is a diagram illustrating dependence of the filter characteristic on temperature;

FIG. 11 is a diagram illustrating an example of data stored in a memory according to the second embodiment of the present invention;

FIG. 12 is a diagram illustrating the chromatic dispersion compensating apparatus according to a third embodiment and a fourth embodiment of the present invention;

FIG. 13 is a flowchart illustrating the flow of temperature control according to the third embodiment of the present invention;

FIGS. 14A and 14B illustrate a first relationship between a temperature waveform and an optical level waveform according to the fourth embodiment of the present invention;

FIGS. 15A and 15B illustrate a second relationship between the temperature waveform and the optical level waveform according to the fourth embodiment of the present invention;

FIGS. 16A and 16B illustrate a third relationship between the temperature waveform and the optical level waveform according to the fourth embodiment of the present invention;

FIG. 17 is a flowchart illustrating the flow of temperature control according to the fourth embodiment of the present invention;

FIG. 18 is a diagram illustrating the chromatic dispersion compensating apparatus according to a fifth embodiment of the present invention;

FIG. 19 is a diagram illustrating an example of the relationship between the filter characteristic of the VIPA-DCM and a wavelength used and a monitor light wavelength;

FIG. 20 is a diagram illustrating the filter characteristic in the wavelength used and the monitor light wavelength;

FIG. 21 is a diagram illustrating the chromatic dispersion compensating apparatus according to a sixth embodiment of the present invention;

FIG. 22 is a diagram illustrating another system using the chromatic dispersion compensating apparatus according to a seventh embodiment of the present invention;

FIG. 23 is a diagram illustrating the chromatic dispersion compensating apparatus according to an eighth embodiment and a ninth embodiment of the present invention;

FIG. 24 is another diagram illustrating the chromatic dispersion compensating apparatus according to the eighth embodiment and the ninth embodiment of the present invention;

FIG. 25 is a diagram illustrating the filter characteristics in the wavelength used and in the monitor light wavelength according to the eighth embodiment of the present invention;

FIGS. 26A and 26B illustrate a first relationship between the wavelength waveform and the optical level waveform according to the eighth embodiment of the present invention;

FIGS. 27A and 27B illustrate a second relationship between the wavelength waveform and the optical level waveform according to the eighth embodiment of the present invention;

FIGS. 28A and 28B illustrate a third relationship between the wavelength waveform and the optical level waveform according to the eighth embodiment of the present invention;

FIG. 29 is a flowchart illustrating the flow of control according to the eighth embodiment of the present invention;

FIG. 30 is a diagram illustrating the waveform of a monitor light source according to the ninth embodiment of the present invention;

FIG. 31 is a flowchart illustrating the flow of control according to the ninth embodiment of the present invention;

FIGS. 32A through 32C are diagrams illustrating the relationship between the optical level of monitor light and the filter characteristics used according to the ninth embodiment of the present invention; and

FIG. 33 is a diagram illustrating the filter characteristic of the VIPA-DCM and an example of selection of monitor light wavelengths λm1 and λm2 according to the present invention.

DETAILED DESCRIPTION OF THE PREFERRED EMBODIMENTS

Hereinafter, embodiments of the present invention will be described in detail with reference to the attached drawings, wherein the like reference numerals refer to the like elements throughout. The present invention may, however, be embodied in many different forms and should not be construed as being limited to the embodiments set forth herein. Rather, these embodiments are provided so that the present disclosure will be thorough and complete, and will fully convey the concept of the invention to those skilled in the art.

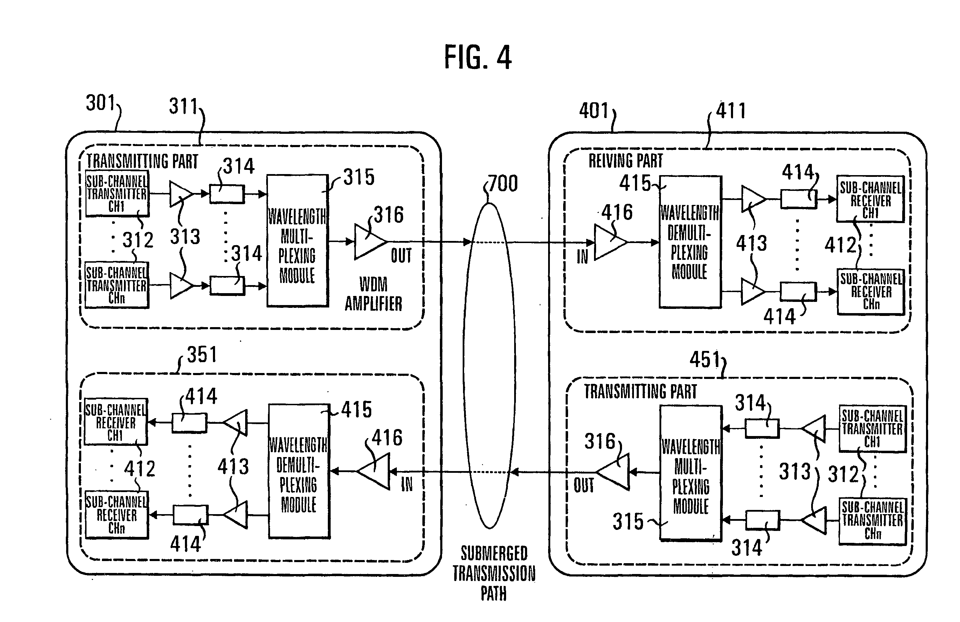

FIG. 4 illustrates an example of a system configuration to which the chromatic dispersion compensating apparatus of the present invention is applied. This figure illustrates an example of a submerged transmission system utilizing a wavelength division multiplexing (WDM) optical transmission system.

In FIG. 4, a first terminal 301 and a second terminal 401 are connected with a submerged transmission path 700.

The terminals 301, 401 are respectively configured with transmitting parts 311, 451 and receiving parts 351, 411.

The transmitting part 311 of the first terminal 301 includes a plurality of sub-channel transmitters 312 for transmitting an optical signal containing a plurality of different wavelengths, channel amplifiers 313 respectively corresponding to each sub-channel transmitter 312, chromatic dispersion compensating modules 314, a wavelength multiplexing module 315 for wavelength multiplexing an optical signal from each sub-channel, and a WDM amplifier 316 for amplifying the wavelength-multiplexed optical signal. The transmitting part 451 of the second terminal 401 has a similar structure.

The receiving part 411 of the second terminal 401 includes a WDM amplifier 416 for amplifying the WDM signal from the submerged transmission path 700, a wavelength demultiplexing module 415 for demultiplexing the amplified WDM signal into optical signals of differing wavelengths, channel amplifiers 413 respectively corresponding to the isolated optical signals of each wavelength, chromatic dispersion compensating modules 414, and sub-channel receivers 412. The receiving part 351 of the first terminal 301 has a similar structure.

The optical signals from the sub-channel transmitters 312 of the first terminal 301 are respectively amplified using the channel amplifiers 313 and transmitted to the chromatic dispersion compensating modules 314, to which the present invention is applied, to generate predetermined chromatic dispersion. The optical signals are multiplexed with the wavelength multiplexing module 315 to generate the WDM signal, amplified with the WDM amplifier 316, and then transmitted to the submerged transmission path 700.

The WDM signal input to the receiving part 411 of the second terminal 401, after propagation through the submerged transmission path 700, is amplified with the WDM amplifier 416. The individual optical signals are separated by wavelength with the wavelength demultiplexing module 415, and amplified respectively with the channel amplifiers 413. The chromatic dispersion compensating modules 414, to which the present invention is applied, respectively receive the amplified optical signals and generate predetermined chromatic dispersion. The optical signals are then input to each sub-channel receiver 412.

Communication to the first terminal 301 from the second terminal 401 is performed in a similar manner to form a two-way submerged transmission system.

The WDM signal becomes chromatically dispersed while it is propagated through the submerged transmission path 700, but the chromatic dispersion may be compensated for and a satisfactory receiving characteristic can be attained by generating chromatic dispersion inverse to the chromatic dispersion generated in the submerged transmission path 700 with the chromatic dispersion compensating modules 314 of the first terminal 301 and the chromatic dispersion compensating modules 414 of the second terminal 401.

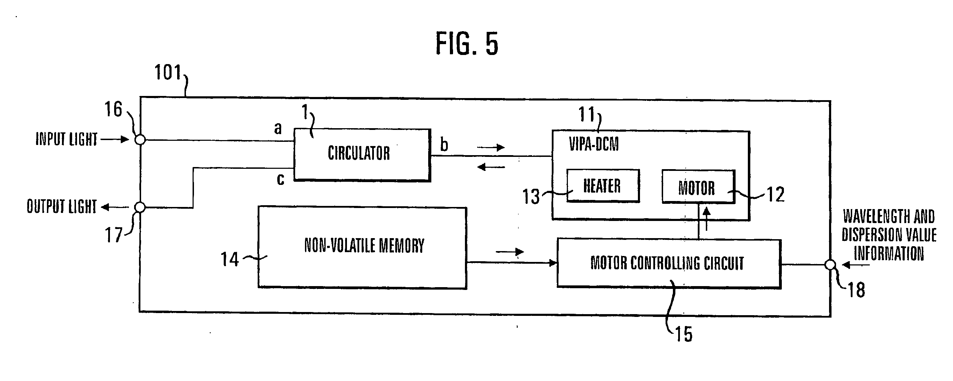

FIG. 5 illustrates an embodiment of a chromatic dispersion apparatus of the present invention.

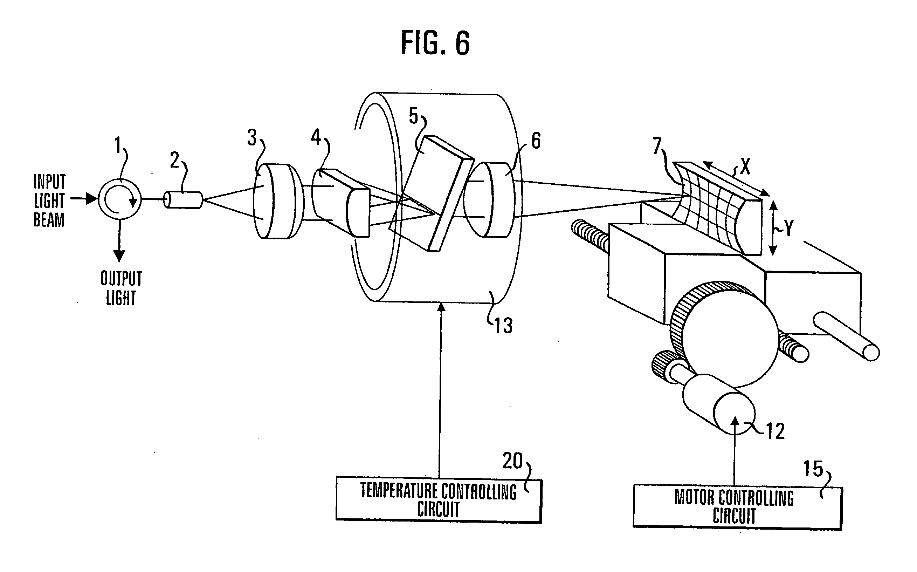

In FIG. 5, a chromatic dispersion compensating apparatus 101 includes a VIPA-type chromatic dispersion compensating module (VIPA-DCM) 11, a motor 12 provided to change positions of the VIPA within the VIPA-DCM 11, a three-dimensional mirror 7 (FIG. 6) to return light, and a heater 13 for keeping a glass plate 5 forming the VIPA-DCM 11 at a constant temperature and stabilizing a chromatic dispersion value generated by the VIPA-DCM 11.

FIG. 6 illustrates an example of the configuration of the VIPA-DCM 11, the motor 12, and the heater 13. The VIPA-DCM 11 has a configuration similar to that shown in FIG. 1. The motor 12 is capable of moving the three-dimensional mirror 7 in the X-axis direction.

Moreover, in FIG. 5, the chromatic dispersion compensating apparatus 101 further includes a non-volatile memory 14 to store, for a plurality of wavelengths, the chromatic dispersion values and data indicating the motor controlling amount corresponding to the chromatic dispersion values, and a motor controlling circuit 15 for obtaining, from the non-volatile memory 14, the motor controlling amount corresponding to the designated wavelength used and the designated chromatic dispersion value and operating the motor 12 based on the corresponding motor controlling amount.

The chromatic dispersion compensating apparatus 101 also includes a light inputting terminal 16 for receiving external input light, a light outputting terminal 17 for outputting light outside the chromatic dispersion compensating apparatus 101, a circulator 1 for transferring the input light from the light inputting terminal 16 to the VIPA-DCM 11 and guiding the output light from the VIPA-DCM 11 to the light outputting terminal 17, and an information designation inputting terminal 18 for designating the wavelength used and the chromatic dispersion value to the motor controlling circuit 15.

In FIG. 5, the input light received at the light inputting terminal 16 is input to a port a of the circulator 1, output from a port b, and is then input to the VIPA-DCM 11.

The output light from the VIPA-DCM 11 is input to the port b of the circulator 1, output from a port c, and is then output from the light outputting terminal 17. The input light received externally becomes the output light output from the chromatic dispersion compensating apparatus 101 through generation of the predetermined chromatic dispersion using the VIPA-DCM 11.

The heater 13 is provided to keep the glass plate 5 forming the VIPA-DCM at a constant temperature and to stabilize the chromatic dispersion value generated by the VIPA-DCM.

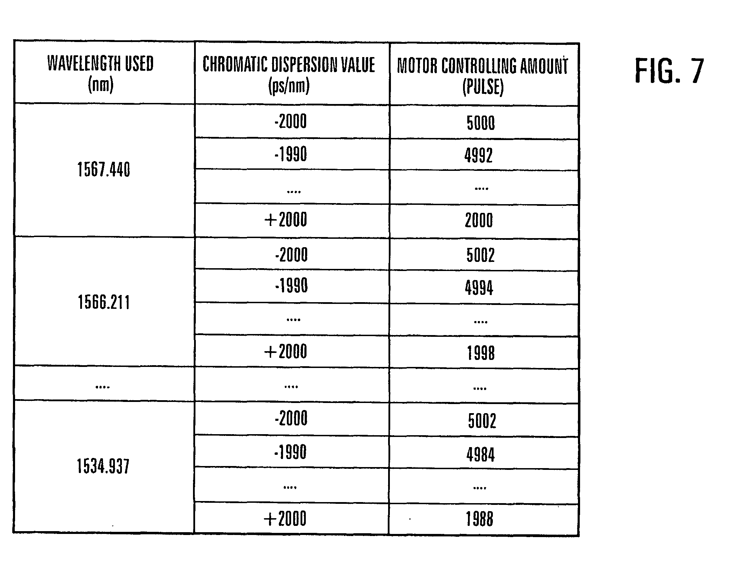

FIG. 7 illustrates an example of data stored in the non-volatile memory 14 of FIG. 5. In the data table shown, a plurality of chromatic dispersion values and motor controlling amounts corresponding to the chromatic dispersion values are stored for each wavelength used. For example, in FIG. 7, as the wavelengths used, the data for 18 wavelengths ranging from 1567.440 nm to 1534.937 nm are stored, with an interval of about 1.2 nm.

For each wavelength used, the chromatic dispersion values up to +2000 ps/nm from-2000 ps/nm are classified into 401 chromatic dispersion values, with an interval of 10 nm, and the motor controlling amounts corresponding to these chromatic dispersion values are respectively stored. In FIG. 7, the motor controlling amount is expressed as the number of pulses given to the motor 12.

Next, a method of controlling the chromatic dispersion compensating apparatus 101 is described below.

First, before starting operation of the transmission system, the wavelength to use with the dispersion compensating apparatus 101 and the required chromatic dispersion value are determined, and then control of the dispersion compensating apparatus 101 is started.

The predetermined wavelength used (e.g., one wavelength in the wavelength multiplexing transmission system, such as 1566.211 nm) and the chromatic dispersion value (e.g., the predetermined chromatic dispersion value calculated from the fiber characteristic and transmission distance used in the transmission system, such as -1990 ps/nm) are input to the motor controlling circuit 15 through the information designation inputting terminal 18.

Upon receipt of the wavelength and chromatic dispersion values, the motor 12 controlling circuit 15 obtains the motor controlling amount for the relevant wavelength and the chromatic dispersion value from the non-volatile memory 14.

In the example of FIG. 7, 4994 pulses can be obtained as the motor controlling amount corresponding to the wavelength of 1566.211 nm and the chromatic dispersion value of - 1990 ps/nm.

The motor controlling circuit 15 operates the motor 12 based on this motor controlling amount.

With such control, the motor controlling amount may be easily determined to obtain the necessary chromatic dispersion value, even for a wavelength other than the design wavelength.

In FIG. 7, the upper limit value and lower limit value of the wavelength, the interval of wavelengths, the upper limit value and lower limit value of the chromatic dispersion value, and the interval of the chromatic dispersion value are not limited to those illustrated and the wavelength, for example, may be set to that required for the particular transmission system, and every wavelength that can be adapted to the VIPA-type chromatic dispersion compensating module may also be used. Also, the upper limit value and the lower limit value of the chromatic dispersion value may be limited only to the chromatic dispersion value required for the transmission system, and the chromatic dispersion value may also be set to the maximum positive chromatic dispersion value and negative chromatic dispersion value that can be realized with the VIPA-type chromatic dispersion compensating module. In addition, the interval of the chromatic dispersion value may be changed as required.

In FIG. 7, the relevant values have been introduced as the wavelength used, the chromatic dispersion value, and the motor controlling amount, but are not limited thereto, and the amount of data to be stored can be reduced by defining, for example, the wavelength of 1567.440 nm as wavelength No. 1 and the chromatic dispersion value of -2000 ps/nm as chromatic dispersion value No. 1, etc.

Further, when the relationship between the chromatic dispersion value at a certain wavelength and the motor controlling amount may be approximated with a linear line as illustrated in FIG. 2, the motor controlling amount at the predetermined chromatic dispersion value can be obtained by a calculation by storing any one of data of two points of the motor controlling amount corresponding to the chromatic dispersion value at the relevant wavelength, data of a point of the motor controlling amount corresponding to the chromatic dispersion value and data of inclination of the linear line indicating the motor controlling amount corresponding to the chromatic dispersion value, and also providing an arithmetic circuit to the motor controlling circuit 15. In this case, it is enough when only a comparatively small amount of data are stored in the non-volatile memory 14.

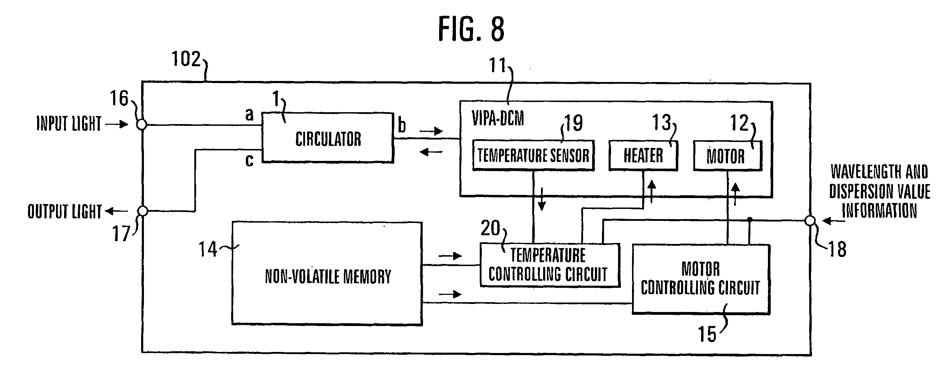

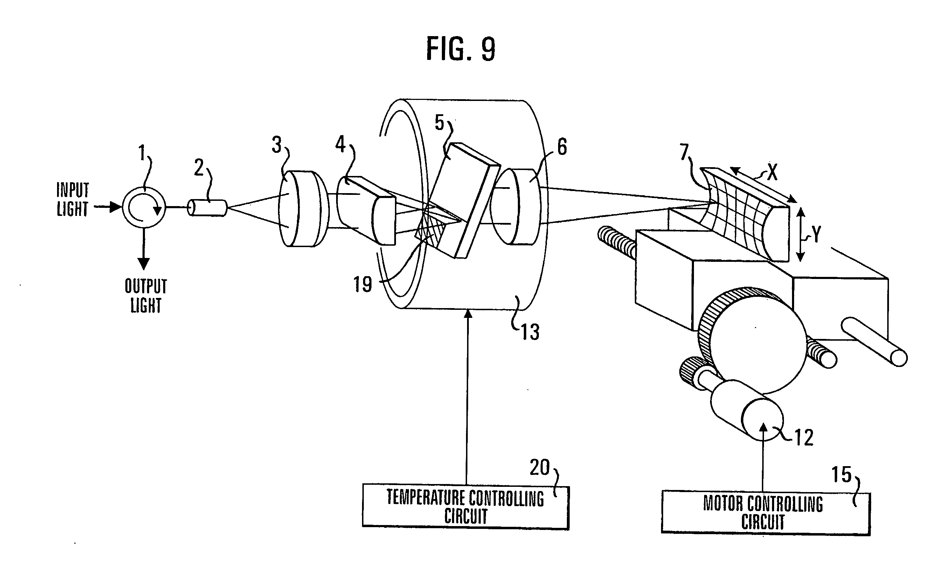

FIG. 8 illustrates the a chromatic dispersion compensating apparatus according to another embodiment of the present invention. In FIG. 8, the chromatic dispersion compensating apparatus 102 includes the VIPA-DCM 11, the motor 12 that changes the relative position between the VIPA in the VIPA-DCM 11 and the three-dimensional mirror 7 (FIG. 9), the heater 13 for heating the VIPA, and a temperature sensor 19 to detect the temperature of the VIPA.

FIG. 9 illustrates an example of structures of the VIPA-DCM 11, the motor 12, the heater 13, and the temperature sensor 19.

Moreover, in FIG. 8, the chromatic dispersion compensating apparatus 102 includes the non-volatile memory 14 to store the data indicating a plurality of chromatic dispersion values and corresponding controlling amounts of the motor 12 for a plurality of wavelengths, and data indicating a plurality of chromatic dispersion values for the plurality of wavelengths and corresponding temperatures of the VIPA resulting in a minimum loss of the output light. The chromatic dispersion compensating apparatus 102 also includes the motor controlling circuit 15 for obtaining the motor controlling amount of the motor 12 corresponding to the designated wavelength used and the designated chromatic dispersion value from the non-volatile memory 14, and then operating the motor 12 based on the corresponding motor controlling amount.

In addition, the chromatic dispersion compensating apparatus 102 includes a temperature controlling circuit 20 for obtaining, in regard to the designated wavelength used and the designated chromatic dispersion value, the temperature corresponding thereto, based on the data stored in the non-volatile memory 14, and then controlling the heater 13, resulting in the temperature of the VIPA obtained from the temperature sensor 19 being approximately equal to the temperature obtained from the non-volatile memory 14.

The chromatic dispersion compensating apparatus 102 also includes the light inputting terminal 16 for receiving external input light, the light outputting terminal 17 for externally outputting the output light, the circulator 1 for transferring the externally received input light to the VIPA-DCM 11 from the light inputting terminal 16 and guiding the output light from the VIPA-DCM 11 to the light outputting terminal 17, and the information designation inputting terminal 18 for providing the designated wavelength and chromatic dispersion value to the motor controlling circuit 15 and the temperature controlling circuit 20.

In FIG. 8, the light input from the light inputting terminal 16 is input to port a of the circulator 1, output from port b, and is then input to the VIPA-DCM 11.

The output light from the VIPA-DCM 11 is input to port b of the circulator 1, output from port c, and is then externally output from the light outputting terminal 17. In this process, the input light externally received is used to generate the predetermined chromatic dispersion in the VIPA-DCM 11 and becomes the externally output light.

The filter characteristic of the VIPA-type chromatic dispersion compensating module, that is, the loss characteristic thereof depending on the wavelength changes, according to the temperature of the VIPA.

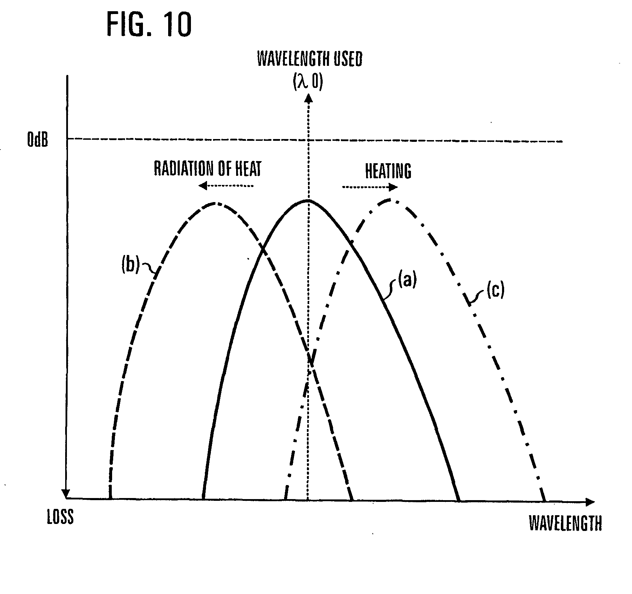

FIG. 10 illustrates the filter characteristic of the VIPA-type chromatic dispersion compensating module changing depending on the temperature of the glass plate 5 forming the VIPA.

In FIG. 10, curve (a) is the filter characteristic of the VIPA-type chromatic dispersion compensating module when the temperature of glass plate 5 is t, indicating that the loss is minimized when the wavelength used is λ0. This means that the loss of the light is minimized for the light emitted in the interference direction φ0 in the glass plate 5 corresponding to λ0 satisfying the formula (1 ).

When the glass plate 5 is cooled (e.g., with a cooling element or the like) and the temperature thereof is lowered to t - Δt, the glass plate 5 contracts and the thickness thereof is reduced to d - Δd.

In this case, the wavelength of the light satisfying the formula (1 ) and indicating the interference direction φ0 in the glass plate 5 becomes shorter than λ0 and the filter characteristic under this condition shows that loss of signal is minimized at a wavelength shorter than λ0, as illustrated by curve (b) of FIG. 10, and loss of the signal becomes larger than that of curve (a) when the wavelength used is λ0. On the other hand, when the filter has the characteristic indicated by curve (b) of FIG. 10, loss of signal at wavelength λ0 can be improved by heating the glass plate 5 and then controlling the filter characteristic to become close to the characteristic of curve (a) of FIG. 10.

When the glass plate 5 is heated to raise its temperature, the glass plate 5 expands and becomes thicker. As a result, loss of signal is minimized at the wavelength that is longer than λ0, as illustrated by curve (c) of FIG. 10, and such loss becomes larger than that of curve (a) at the wavelength λ0. On the other hand, when the filter has the characteristic of curve (c) of FIG. 10, loss at the wavelength λ0 can be improved by radiating heat (or cooling with a cooling element or the like) from the glass plate 5 and controlling the filter characteristic to become close to the characteristic shown by curve (a).

Accordingly, when the necessary chromatic dispersion value is generated at the particular wavelength used, loss of signal can be minimized by controlling the temperature of the glass plate 5 through application of the controlling process described above.

For example, as illustrated by curve (b) of FIG. 3, when the VIPA-type chromatic dispersion compensating module is used under the maximum value of negative dispersion, the characteristic shown by curve (c) of FIG. 10 can be approximated to the characteristic shown by curve (a) of FIG. 10, and loss at the wavelength used can also be improved by lowering the temperature of the glass plate 5 through radiation of heat (or through cooling with a cooling element or the like).

In the same manner, for example, when the VIPA-type chromatic dispersion compensating module is used under the maximum value of positive dispersion as illustrated by the characteristic shown by curve (c) of FIG. 3, the characteristic of curve (b) of FIG. 10 can be approximated to the characteristic of curve (a) of FIG. 10, and loss of signal at the wavelength used can also be improved by heating the glass plate 5 to raise the temperature thereof.

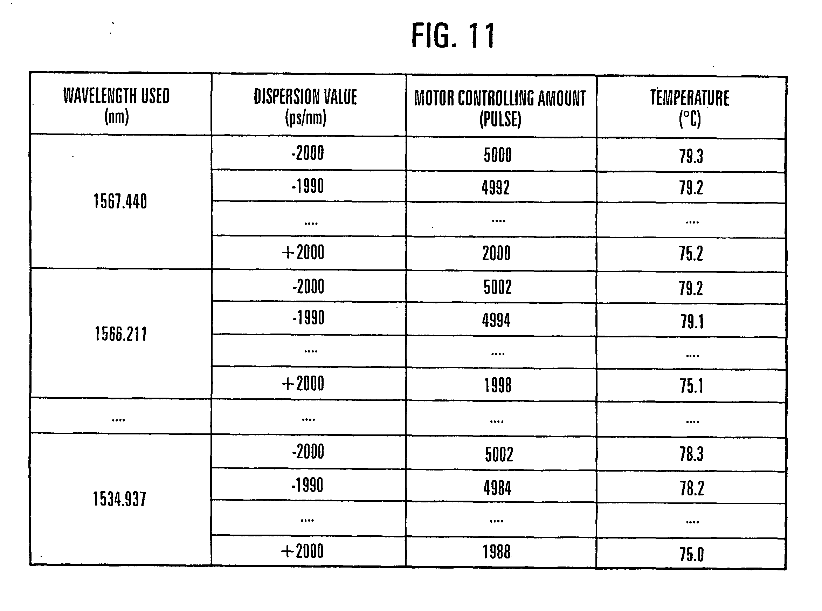

FIG. 11 illustrates an example of data stored in the non-volatile memory 14 illustrated in FIG. 8. The data include the data of a plurality of chromatic dispersion values for each wavelength used and the motor controlling amounts corresponding to the chromatic dispersion values,and the data of a plurality of chromatic dispersion values for each wavelength used and the temperature data of the VIPA corresponding to the chromatic dispersion values.

In the example of FIG. 11, the wavelengths ranging from 1567.440 nm to 1534.937 nm of the wavelengths ranging used are stored as the data of 18 wavelengths with an interval of about 1.2 nm.

In regard to each wavelength, the chromatic dispersion values up to +2000 ps/nm from -2000 ps/nm are classified into 401 chromatic dispersion values with an interval of 10 nm, and the motor controlling amount and the temperature corresponding to the chromatic dispersion values are respectively stored.

Next, the controlling method of the present invention is described.

The predetermined wavelength used (e.g., one wavelength in the wavelength multiplex transmission system, such as 1566.211 nm), and the predetermined chromatic dispersion value (e.g., the predetermined chromatic dispersion value calculated from the fiber characteristic and the transmission distance used in the relevant system, such as -1990 ps/nm), are input to the motor controlling circuit 15 and the temperature controlling circuit 20 via the information designation inputting terminal 18.

Upon designation of the wavelength and chromatic dispersion value, the motor controlling circuit 15 and the temperature controlling circuit 20 respectively obtain the motor controlling amount and the temperature corresponding to the wavelength and chromatic dispersion value from the non-volatile memory 14.

In the example of FIG. 11, the motor controlling circuit 15 obtains the motor controlling amount of 4994 pulses and the temperature controlling circuit 20 obtains the temperature of 79.1 °C corresponding to the designated wavelength of 1566.211 nm and the chromatic dispersion value of -1990 ps/nm.

The motor controlling circuit 15 controls the motor 12 based on the motor controlling amount obtained, while the temperature controlling circuit 20 compares the temperature indicated by the temperature sensor 19 with the temperature of 79.1°C to control the heater 13 to bring the VIPA to 79.1°C.

Through this control, loss of signal in the particular wavelength and necessary chromatic dispersion value can be minimized.

In FIG. 11, the practical values are indicated as the temperature data, but the temperature data are not restricted to the values shown and the amount of data to be stored can be reduced by, for example, defining the temperature of 75.0°C as temperature No. 1, the temperature of 75.1 °C as temperature No. 2, etc. Also, voltage, for example, rather than temperature may be used for controlling the heater 13, with the voltage to be controlled used as the data.

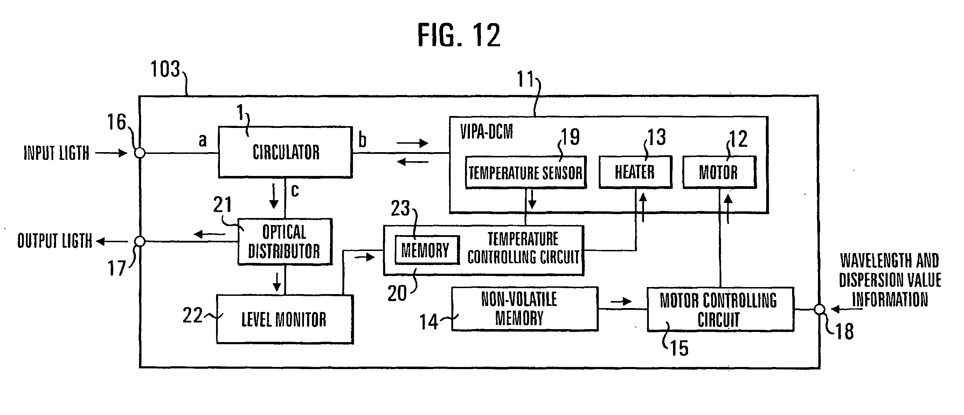

FIG. 12 illustrates a third embodiment of the chromatic dispersion compensating apparatus of the present invention.

The chromatic dispersion compensating apparatus 103 of FIG. 12 includes the VIPA-DCM 11, the motor 12 provided to change the relative position between the VIPA in the VIPA-DCM 11 and the three-dimensional mirror (not shown), the non-volatile memory 14 storing predetermined data indicating a plurality of chromatic dispersion values for a plurality of wavelengths and corresponding motor controlling amounts of the motor 12, and the motor controlling circuit 15 used as a relative position controller for obtaining the motor controlling amount corresponding to the designated wavelength used and the designated chromatic dispersion value from the non-volatile memory 14 and then operating the motor 12 based on the corresponding motor controlling mount.

The chromatic dispersion compensating apparatus 103 also includes the heater 13 for heating the VIPA, the temperature sensor 19 for detecting the temperature of the VIPA, an optical distributor 21 for branching the output light from the VIPA-DCM 11, a level monitor 22 for measuring the intensity of light branched from the optical distributor 21, and the temperature controlling circuit 20 for changing the temperature of the VIPA and controlling the heater 13 to provide the approximately maximum light intensity obtained from the level monitor 22.

The temperature controlling circuit 20 is provided with a memory 23 for storing the data required for temperature control of the temperature controlling circuit 20.

The chromatic dispersion compensating module 103 also includes the light inputting terminal 16 for receiving external input light, the light outputting terminal 17 for externally outputting light, the circulator 1 for transferring the externally input light to the VIPA-DCM 11 and guiding the output light from the VIPA-DCM 11 to the light outputting terminal 17, and the information designation inputting terminal 18 for providing the wavelength and the chromatic dispersion value to the motor controlling circuit 15.

The non-volatile memory 14 stores the data as illustrated in FIG. 7. In FIG. 12, the light input from the light inputting terminal 16 is input to port a of the circulator 1, from port b, and is then input to the VIPA-DCM 11.

The output light from the VIPA-DCM 11 is input to port b of the circulator 1, output from port c, and branched with the optical distributor 21, with one of the branched lights being externally output from the light outputting terminal 17.

The intensity of other light branched with the optical distributor 21 is measured with the level monitor 22 and the measured value thereof is then input to the temperature controlling circuit 20.

The method of controlling the motor 12 to obtain the predetermined chromatic dispersion value is similar to that of the first embodiment of the present invention described above, using the motor controlling circuit 15 to obtain the predetermined chromatic dispersion value at the predetermined wavelength.

Next, the temperature controlling method is described below.

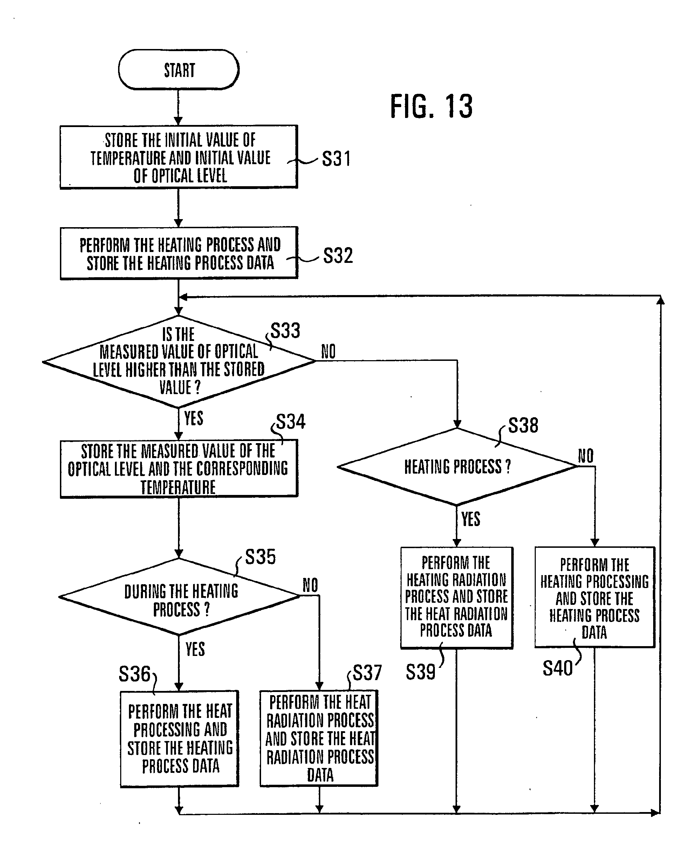

FIG. 13 is a flowchart illustrating temperature control according to the third embodiment of the present invention.

At operation S31, the temperature controlling circuit 20 stores, to the memory 23, the temperature data from the temperature sensor 19 and the optical level data from the level monitor 22, respectively, as the initial value of a temperature storing value and the initial value of an optical level storing value.

Next, at operation S32, the temperature controlling circuit 20 controls the heater 13 to heat the VIPA and stores the data indicating that the VIPA is being heated to the memory 23 as a heating condition storing value.

The temperature controlling circuit 20 compares, at operation S33, the measured value of the optical level measured with the level monitor 22 to the optical level storing value stored in the memory 23.

When the measured value of the optical level is higher than the optical level storing value, the measured value of the optical level and the temperature obtained from the temperature sensor 19 are respectively stored, at operation S34, as the new temperature storing value and the new optical level storing value.

In this case, because the measured value of the optical level has increased, current control being performed by the heater 13 is continued to obtain a larger optical level.

Therefore, with reference to the heating condition storing value of the memory 23, the temperature controlling circuit 20 determines, at operation S35, whether the heating process is continued or whether a heat radiating process is carried out.

When the heating process is continued, data indicating continuation of the heating process is stored in memory 23 as the new heating condition storing value at operation S36.

Referring to FIG. 10, when the heating process is continued, the curve (b) shifts toward the curve (a) and loss at the wavelength used tends to decrease under the control of the above heating process.

When it is determined at operation S35 that the heating process is not continued, that is, that the heat radiating process has already started, this heat radiating process is continued and indicated in the memory 23 as the new heating condition storing value at operation S37.

Referring to in FIG. 10, when the heat radiating process is continued, the curve (c) shifts toward the curve (a) and loss at the wavelength used tends to decrease under the control of the above heat radiating process. After operation S36 or operation S37 has completed, control returns to operation S33.

At operation S33, when it is determined that the measured value of the optical level is not higher than the optical level storing value as a result of comparing, by the temperature control circuit 20, the measured value of the optical level measured with the level monitor 22 and the optical level storing value, the measured value of the optical level is either identical to the stored value or has been reduced. Accordingly, the current control for the heater 13 is inverted to obtain a higher optical level.

Therefore, with reference to the heating condition storing value of the memory 23, the temperature controlling circuit 20 determines whether the heating process is continued at operation S38.

When it is determined at operation S38 that the heating process is still continued, the temperature controlling circuit 20 changes from controlling the heating process to controlling the heat radiating process and stores the heat radiating process data to the memory 23 as the new heating condition storing value at operation S39.

This means that in FIG. 10, the curve (c) shifts in the inverse direction from the curve (a) and loss tends to increase at the wavelength used under the control of the heating process, but when the control is changed to the heat radiating process from the heating process, the curve (c) shifts toward the curve (a).

When it is determined at operation S38 that the heat radiating process data is continued, the temperature controlling circuit 20 changes the control to the heating process and stores the heating process data to the memory 23 as the new heating condition storing value at operation S40.

This means that in FIG. 10, the curve (b) shifts in the inverse direction from the curve (a) and loss at the wavelength used tends to increase, but when the control is changed to the heating process, the curve (b) shifts toward the curve (a).

After operation S39 or operation S40 completes, control returns to operation S33.

With the process described above, the optical level of the branched output light is maintained at approximately the maximum level. That is, when the predetermined chromatic dispersion value is generated at the wavelength used in the VIPA-type chromatic dispersion compensating module, loss can be reduced to almost the minimum value.

A similar effect can be obtained by setting the temperature controlling circuit 20 to execute the processes described above, for example, for only a particular period, and thereafter to execute the temperature control of VIPA based on the temperature stored in the memory 23 and the temperature measured with the temperature sensor 19.

FIG. 12 is used to illustrate a fourth embodiment of the present invention, which has a structure similar to that of the third embodiment described above.

In FIG. 12, the memory 23 previously stores the predetermined temperature as the initial value of a center temperature (described below) to change the temperature of the VIPA.

Here, the controlling method of the motor 12 to obtain the predetermined chromatic dispersion value is identical to that of the first embodiment described above, and it is assumed that the motor 12 has already been controlled with the motor control circuit 15 to obtain the predetermined chromatic dispersion value at the predetermined wavelength.

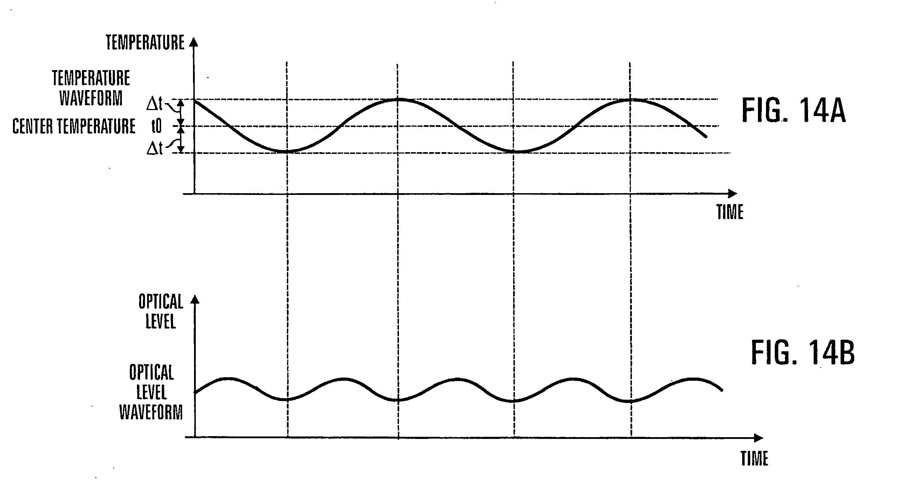

FIGS. 14A through 16B are diagrams illustrating correspondence between temperature waveform and optical level waveform.

FIG. 14A illustrates the temperature waveform. In FIG. 14A, t0 is the center temperature and the temperature is changed within the range of At for this center temperature.

The temperature change generates a change in the filter characteristic.

FIG. 14B illustrates the optical level waveform when the optical level shows the maximum value in the course of changing the temperature. Because the optical level shows the maximum value when the temperature rises and falls, it can be understood that the period for change of the optical level is equal to twice the period for change of temperature. FIG. 14B shows that the filter characteristic is identical to that shown with the curve (a) of FIG. 10.

As described above, it can be understood that when the period of the optical level waveform is almost twice the period of the temperature waveform, the maximum value of the optical level occurs within the temperature range of the temperature waveform.

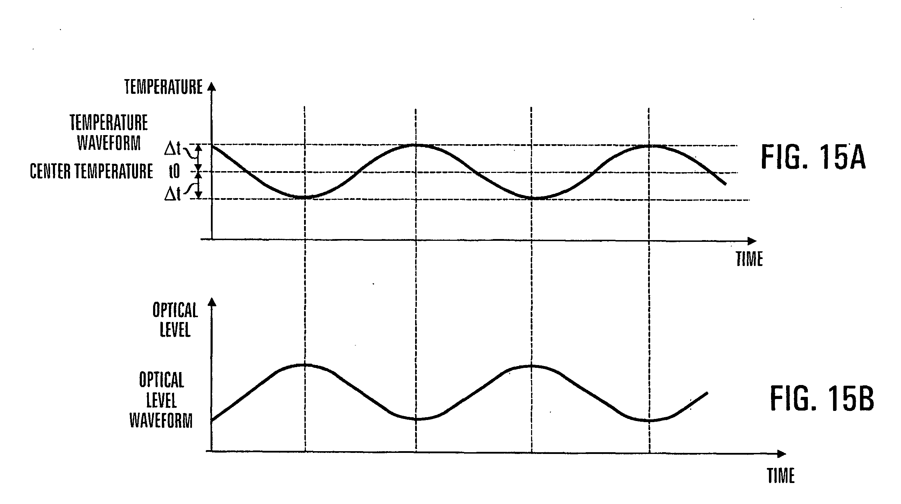

FIG. 15A is identical to FIG. 14A and illustrates a temperature waveform. FIG. 15B illustrates an optical level waveform when the optical level does not reach the maximum value in the course of temperature change, and when the optical level becomes lower during a rise in temperature and higher during a fall in temperature. That is, the phase of the temperature waveform does not match with that of the optical level waveform and the optical level increases during a fall in temperature. Therefore, the optical level has the maximum value when temperature falls. This means that the filter characteristic as illustrated by curve (c) in FIG. 10can be obtained.

It can be understood, therefore, that it is sufficient to decrease temperature to bring the optical level approximately to the maximum value when the period of the optical level waveform does not equal about twice the period of the temperature waveform and the phases of these waveforms do not match each other.

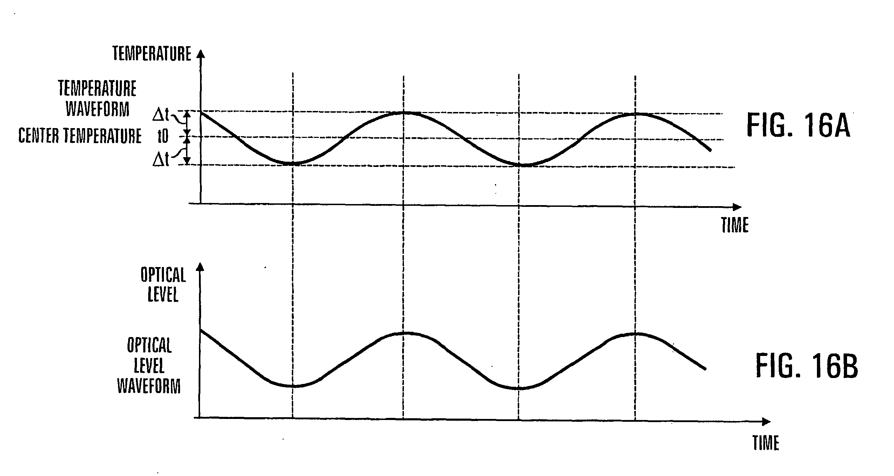

FIG. 16A is identical to FIG. 14A and illustrates a temperature waveform. FIG. 16B illustrates an optical level waveform when the optical level does not reach the maximum value in the course of temperature change, but instead, increases as temperature rises and decreases as temperature falls. That is, because the phases of the temperature waveform and the optical level waveform are approximately matched with each other and the optical level increases as temperature rises, the maximum value can be obtained by raising the temperature. This means that the filter characteristic of curve (b) of FIG. 10can be obtained.

It can be understood, as described above, that it is sufficient to raise the temperature to bring the optical level approximately to the maximum value when the period of the optical level waveform is not equal to about twice the period of the temperature waveform and the phases of these waveforms almost match each other.

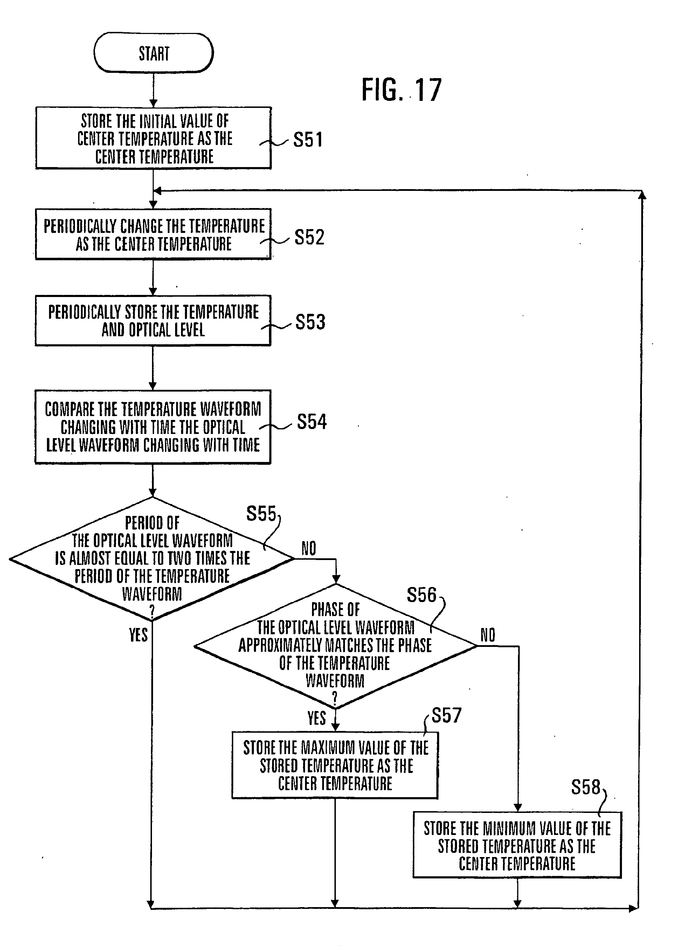

FIG. 17 illustrates a flowchart showing the temperature control flow according to the fourth embodiment of the present invention.

The temperature controlling circuit 20 stores, as the initial value of the center temperature, the temperature that is previously stored in the memory 23 as the center temperature storing value at operation S51.

The temperature controlling circuit 20 controls, within a certain time period, the heater 13 to change the temperature of the VIPA within a certain temperature range, considering the center temperature storing value as the center temperature, at operation S52.

Subsequently, the temperature controlling circuit 20 sequentially stores the temperature data from the temperature sensor 19 and the optical level data from the level monitor 22 in a time period that is less than the time period of temperature change at operation S53.

Next, the temperature controlling circuit 20 obtains respectively a time change waveform of temperature (hereinafter referred to as the temperature waveform) and a time change waveform of optical level (hereinafter referred to as the optical level waveform) from the temperature data, and optical level data which have been stored sequentially, and then compares these waveforms at operation S54.

Next, the temperature controlling circuit 20 determines whether the period of optical level waveform is approximately twice the period of the temperature waveform at operation S55.

When the period is approximately twice the period of the temperature waveform, control returns to operation S52.

When the period is not approximately twice the period of the temperature waveform, it is determined whether the phase of the optical level waveform approximately matches the phase of the temperature waveform at operation S56.

When the phases approximately match each other at operation S56, the maximum value of the temperature stored is then stored as the new center temperature storing value at operation S57. Thereafter, the process returns to operation S52.

When the phases do not approximately match each other at operation S56, the minimum value of the temperature stored is then stored as the new center temperature storing value at operation S57. Thereafter, the process returns to operation S52.

With the processes described above, the optical level of the branched output light is maintained at approximately the maximum value. That is, when the predetermined chromatic dispersion value is generated at the predetermined wavelength used in the VIPA-type chromatic dispersion compensating module, loss can be reduced to about the minimum value.

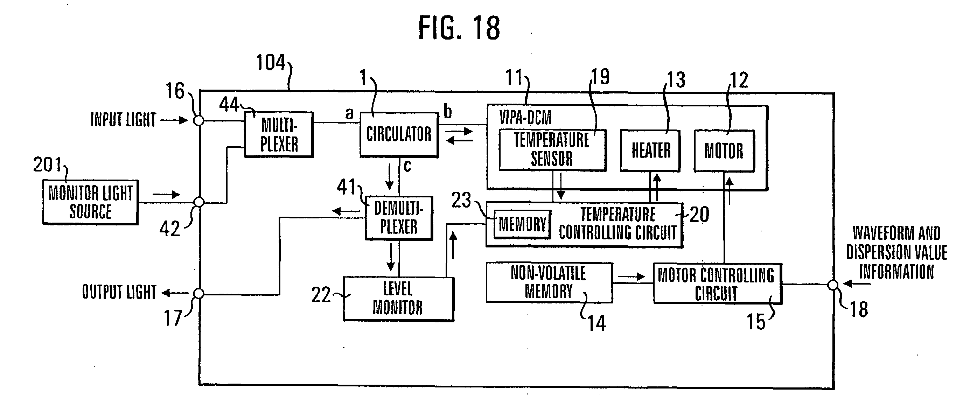

FIG. 18 illustrates a fifth embodiment of a chromatic dispersion compensating apparatus 104 according to the present invention.

In FIG. 18, a monitor light source 201 generates a monitor light that has angular dispersion caused by the VIPA-DCM 11 that is identical to that of light having a first wavelength, and the monitor light has a second wavelength that is different from the first wavelength. The chromatic dispersion compensating apparatus 104 is configured similar to the chromatic dispersion compensating apparatus 103 of FIG. 12. The only differences in the structures are that, in FIG. 18, a monitor light inputting terminal 42 for inputting the monitor light and an optical multiplexer 44 for multiplexing the input light from the light inputting terminal 16 and the input light from the monitor light inputting terminal 42 are provided.

Moreover, rather than using the optical distributor 21 of FIG. 12, a demultiplexer 41 for extracting the monitor light is connected to the port c of the circulator 1 to guide the extracted monitor light to the level monitor 22.

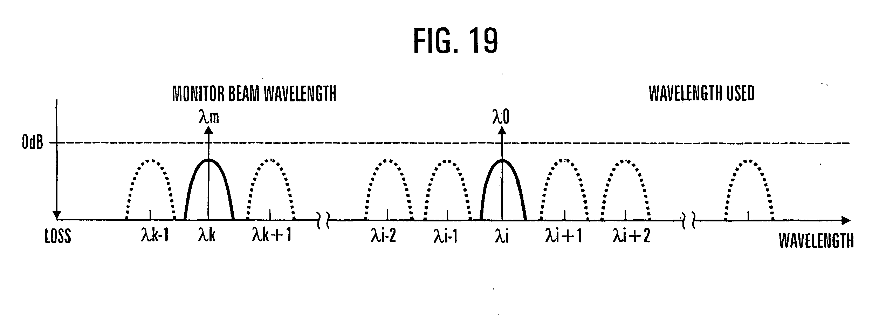

FIG. 19 illustrates an example of the relationship between the filter characteristic of the VIPA-DCM 11 and the wavelength used as the waveform of the input light to generate chromatic dispersion, and the wavelength of the monitor light generated by the monitor light source.

When the VIPA-type chromatic dispersion compensating module 11 is designed using the refraction index of the glass plate 5 defined as the fixed value n, the thickness d, and the interference direction $\phi$, this VIPA-type chromatic dispersion compensating module 11 may be used at a plurality of wavelengths satisfying the formula (1 ). The maximum value of loss appears at a plurality of wavelengths (..., $\lambda k-1$, $\lambda k$, $\lambda k+1$, ..., $\lambda i-1$, $\lambda i$, $\lambda i+1$, ...) as illustrated in FIG. 19, and the filter characteristics in these wavelength bands are approximately identical.

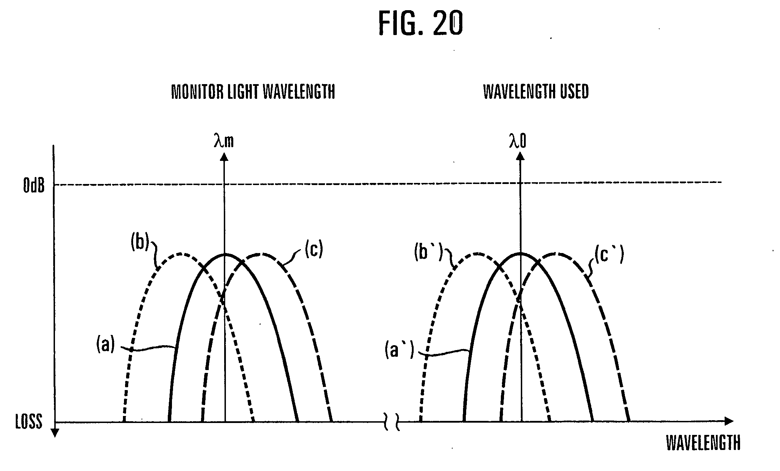

FIG. 20 illustrates filter characteristics in the wavelength used $\lambda 0$ and the monitor light wavelength $\lambda m$.

In FIG. 19, the wavelength used $\lambda 0$ is determined (for example, $\lambda i$) and one wavelength that is different from $\lambda 0$ among a plurality of wavelengths is determined as the monitor light wavelength $\lambda m$ (for example, $\lambda k$).

FIG. 20 shows the filter characteristics where the wavelength used is $\lambda 0$ and the monitor light wavelength is $\lambda m$.

In FIG. 20, the filter characteristics at $\lambda 0$ and $\lambda m$ change depending on the necessary chromatic dispersion value and the temperature of the VIPA, but the changing behavior is about identical in the wavelength used $\lambda 0$ and the monitor light wavelength $\lambda m$.

For example, the filter characteristics in the wavelength $\lambda m$ and in the wavelength $\lambda 0$ respectively correspond to (a) and (a'), (b) and (b'), and (c) and (c') of FIG. 20.

Therefore, loss can be reduced to about the minimum value (in other words, the optical level can be set to about the maximum value), even at the wavelength used $\lambda 0$ by controlling the loss in the monitor light wavelength $\lambda m$ to about the minimum value (in other words, the optical level is set to about the maximum value).

Moreover, the optical level of the monitor light can be maintained at about the maximum value by controlling, depending on the control flow of FIG. 17, the temperature of the VIPA with the temperature controlling circuit 20 with reference to the optical level of the monitor light. That is, when the VIPA-type chromatic dispersion compensating module 11 generates the necessary chromatic dispersion value at the particular wavelength used, loss can be reduced to about the minimum value.

In addition, because the light of the other wavelength that is different from the wavelength used is provided for monitoring purposes in the fifth embodiment, the optical level of the output light becomes higher than that where the light of the wavelength used is branched for the monitoring purposes.

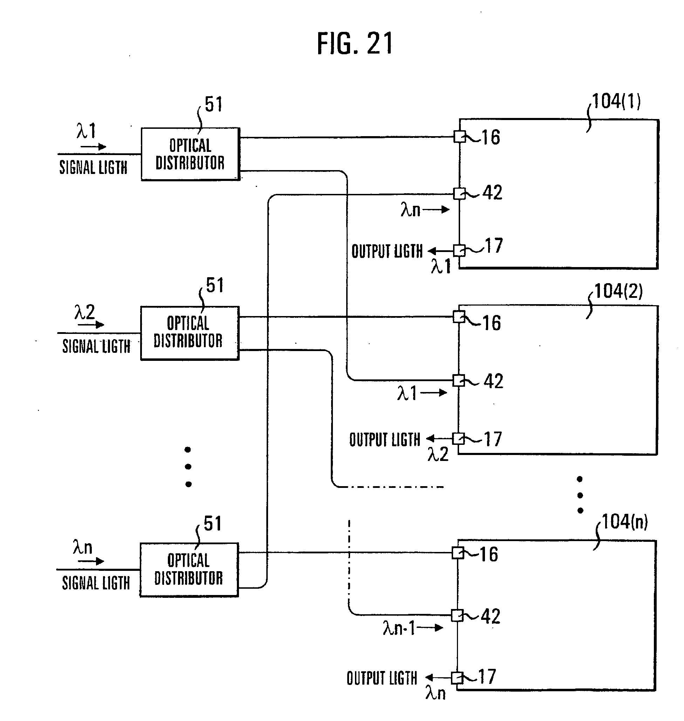

FIG. 21 illustrates a system using the chromatic dispersion compensating apparatus according to a sixth embodiment of the present invention.

The system of FIG. 21 independently gives chromatic dispersions to n signal lights ranging from the wavelengths $\lambda 1$ to $\lambda n$, which generate identical angular dispersion with the VIPA-DCM 11.

In FIG. 21, 104(1 ) to 104(n) respectively designate the chromatic dispersion compensating apparatus 104 illustrated in FIG. 18 and are provided to correspond to the signal lights of the wavelengths $\lambda 1$ to $\lambda n$. The signal lights $\lambda 1$ to $\lambda n$ are respectively distributed with the optical distributors 51 and one of the distributed lights of each optical distributor 51 is supplied to the light inputting terminal 16 of one of the chromatic dispersion compensating apparatus 104 (e.g., 104(1), while the other distributed light is respectively supplied, as the monitor light, to the monitor light inputting terminal 42 of a different one of the chromatic dispersion compensating apparatuses (e.g., 104(2)).

Depending on the control flow of FIG. 17 described above, the optical level of the monitor light can be maintained at about the maximum value by controlling the temperature of the VIPA with the temperature controlling circuit 20, with reference to the optical level of the monitor light. That is, loss can be reduced to about the minimum value in the VIPA- type chromatic dispersion compensating module 11 by generating the necessary chromatic dispersion value at the particular wavelength used.

Moreover, in the sixth embodiment, another light source is not required for the monitor light.

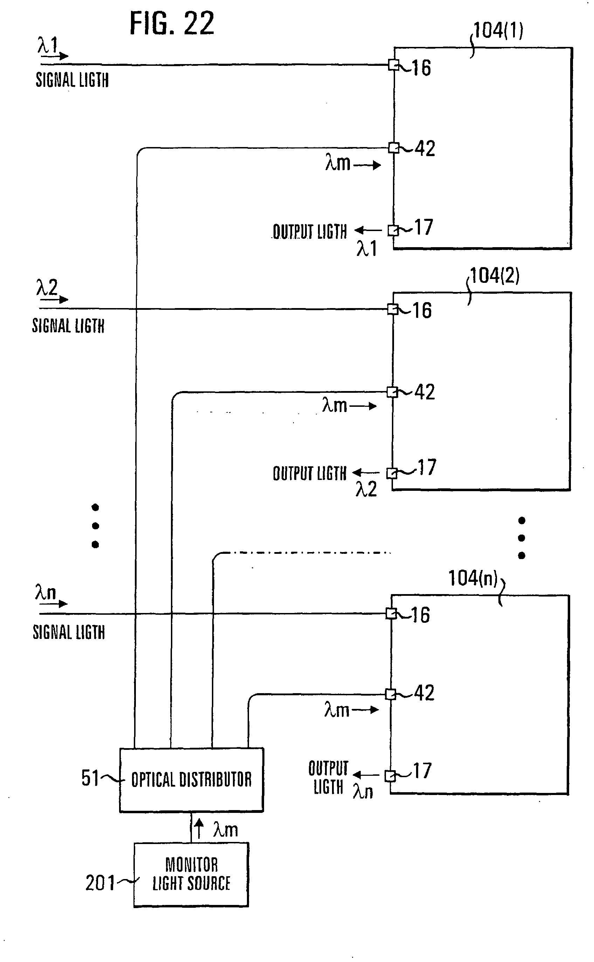

FIG. 22 illustrates a seventh embodiment of a system using the chromatic dispersion compensating apparatus of the present invention.

The system of FIG. 22 provides individual chromatic dispersion to the signal lights having wavelengths $\lambda 1$ to $\lambda n$, which generate identical angular dispersion with the VIPA-DCM 11.

In FIG. 22, 104(1 ) to 104(n) are chromatic dispersion compensating apparatuses 104 of FIG. 18 and are provided to correspond to the respective signal lights having wavelengths $\lambda 1$ to $\lambda n$.

The signal lights $\lambda 1$ to $\lambda n$ are respectively supplied from the light inputting terminals 16 of the corresponding chromatic dispersion compensating apparatuses 104(1) to 104(n) to respectively generate chromatic dispersion and are then output from the light outputting terminals 17.

A monitor light source 201 generates the wavelengths $\lambda m$ that are different from $\lambda 1$ to $\lambda n$ among a plurality of wavelengths that generate the identical angular dispersion with the VIPA-DCM 11, and the monitor lights generated are distributed with the optical distributor 51 and supplied respectively to the chromatic dispersion compensating apparatuses 104(1) to 104(n).

The optical level of the monitor light can be maintained at about the maximum value by controlling, according to the control flow of FIG. 17, the temperature of the VIPA with the temperature controlling circuit 20, with reference to the optical level of the monitor light. That is, when the VIPA-type chromatic dispersion compensating module 11 generates the necessary chromatic dispersion value at the particular wavelength used, loss can be reduced to about the minimum value.

Moreover, in the seventh embodiment, only one monitor light source may be used for the monitor lights of many chromatic dispersion compensating apparatuses 104(1) to 104(n) and, therefore, it is more economical than preparing a monitor light source for each chromatic dispersion compensating apparatus 104(1) to 104(n). Moreover, in the seventh embodiment, only one demultiplexer, which demultiplexes the monitor light having the wavelength $\lambda$m, is required to form the chromatic dispersion compensating apparatus 104(1) and 104(n).

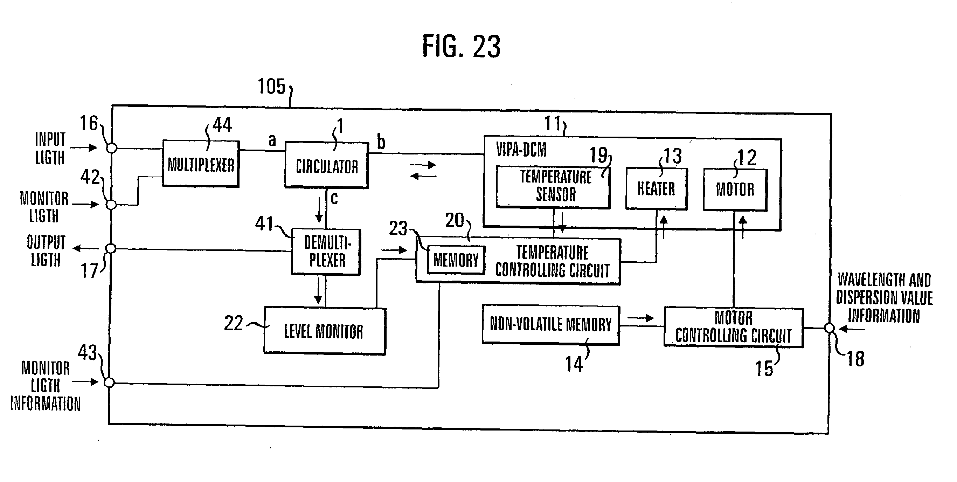

FIG. 23 illustrates an eighth embodiment of the chromatic dispersion compensating apparatus of the present invention.

In FIG. 23, the chromatic dispersion compensating apparatus 105 has a similar structure to the chromatic dispersion compensating apparatus 104 of FIG. 18. The only differences in the structures are that in FIG. 23, a monitor light information inputting terminal 43 is provided to input the information from the monitor light source, which can generate a second wavelength $\lambda$m different from a first wavelength $\lambda$0, to generate angular dispersion identical to the first wavelength $\lambda$0, which generates angular dispersion using the VIPA-DCM 11.

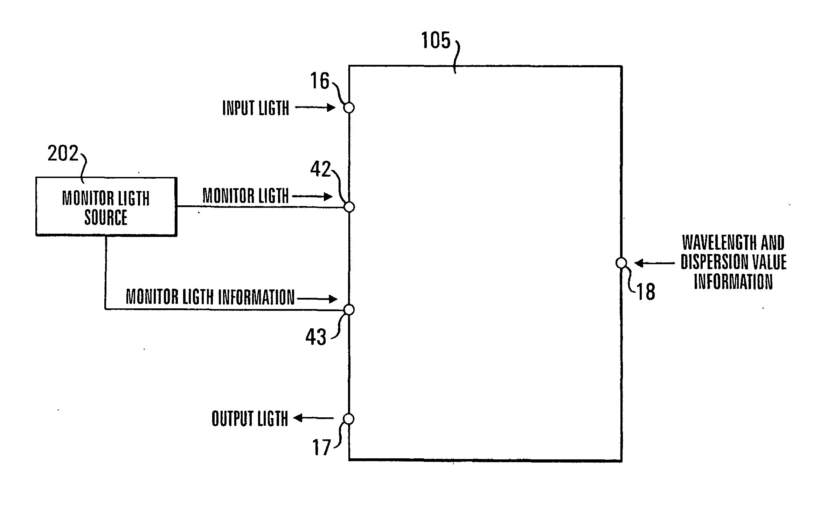

FIG. 24 is another diagram for describing the eighth embodiment and the reference numerals in FIG. 24 correspond to those of FIG. 23.

In FIG. 24, the monitor light source 202 can generate the second wavelength $\lambda$m, which differs from the first wavelength $\lambda$0, to generate angular dispersion identical to that of as the first wavelength to generate an angular dispersion using the VIPA-DCM 11.

In FIG. 23, the light generated from the monitor light source 202 is multiplexed in the optical multiplexer 44 with an input light from the light inputting terminal 16, output from the port c of the circulator 1 via the VIPA-DCM 11, and is then input to the level monitor 22 after having been demultiplexed in the demultiplexer 41.

The monitor light source 202 periodically changes the wavelength of the light generated around the second wavelength $\lambda$m and provides the information indicating the output wavelength to the temperature controlling circuit 20 via the monitor light information inputting terminal 43.

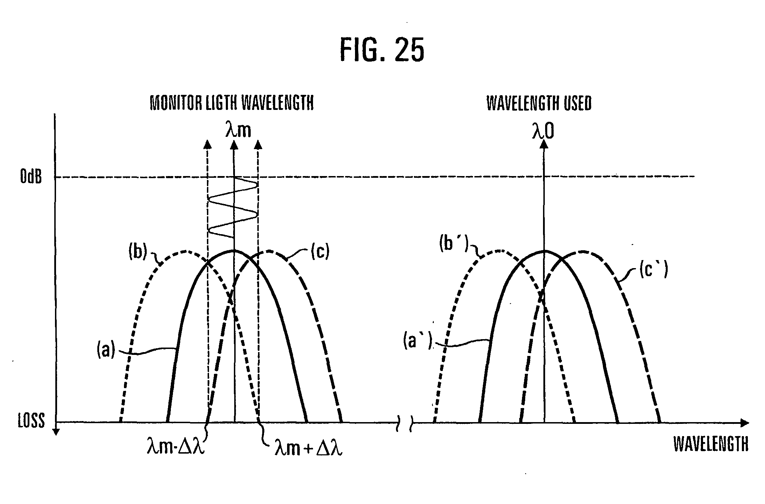

FIG. 25 illustrates the filter characteristic when the wavelength used is $\lambda$0 and the filter characteristic when the wavelength of the monitor light source 202 is $\lambda$m.

Because the filter characteristic when the wavelength of the monitor light source 202 is $\lambda$m and the filter characteristic when the wavelength used is $\lambda$0 respectively correspond to (a) and (a'), (b) and (b'), and (c) and (c') of FIG. 25, loss can be reduced to about the minimum value, even for the wavelength used $\lambda$0, by controlling the loss in the wavelength of the monitor light $\lambda$m to be about the minimum value.

In the eighth embodiment, as illustrated in FIG. 25, the monitor light wavelength ($\lambda$m) is changed in the longer wavelength direction ($\lambda$m+$\Delta\lambda$) and the shorter wavelength direction ($\lambda$m-$\Delta\lambda$), detecting the optical level in each case, and temperature control is performed to provide a loss of about the minimum value.

Here, the method of controlling the motor 12 to obtain the predetermined chromatic dispersion value is identical to that in the first embodiment, and it is assumed that the motor 12 is controlled with the motor controlling circuit 15 to obtain the predetermined chromatic dispersion value in the predetermined wavelength.

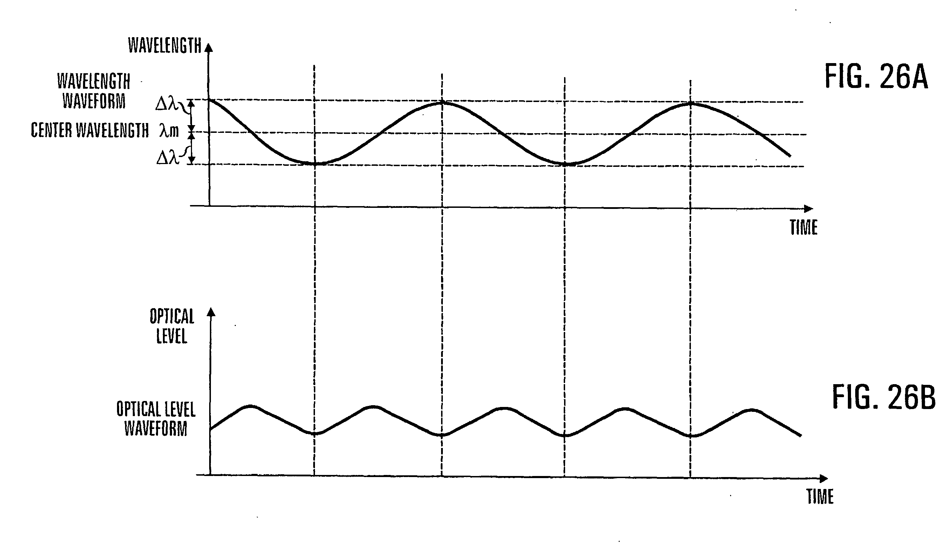

FIGS. 26A through 28B are diagrams illustrating correspondence between the wavelength waveform and the optical level waveform.

FIG. 26A illustrates a wavelength waveform. In FIG. 26A, $\lambda$m designates the center wavelength and the wavelength periodically changes in the range from $\lambda$m-$\Delta\lambda$ and $\lambda$m+$\Delta\lambda$.

The optical level changes depending on this change of wavelength. FIG. 26B is an optical level waveform in which the optical level reaches the maximum value in the course of change of the wavelength. Because the optical level shows the maximum value as the waveform approaches the longer wavelength side and the shorter wavelength side, the period of optical level waveform is equal to twice the period of the wavelength waveform.

When the period of the optical level waveform is equal to about twice the period of the wavelength waveform as described above, the optical level in the monitor light wavelength approximates its maximum value.

Because the filter characteristic in the monitor light wavelength is about identical to the filter characteristic in the wavelength used, the optical level in the wavelength used approximates its maximum value.

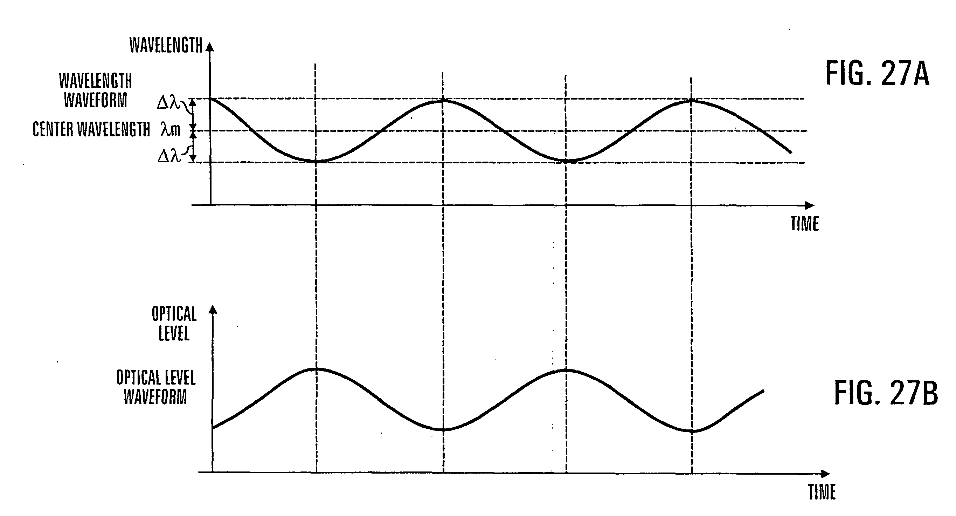

FIG. 27A is identical to FIG. 26A, which illustrates the wavelength waveform. FIG. 27B illustrates the optical level waveform in which the optical level does not show the maximum value in the course of change of waveform. In FIG. 27B, the optical level decreases as the wavelength increases and increases as the wavelength decreases. That is, the phase of the wavelength waveform does not match the phase of the optical level waveform.

Because the optical level waveform shows a characteristic similar to the filter characteristic of FIG. 25B, the filter characteristic can be approximated to that of FIG. 25A by heating the VIPA, as illustrated in FIG. 10.

As described above, it can be understood that when the period of the optical level waveform does not equal about twice the period of the wavelength waveform and the phases of these waveforms are not identical, the optical level in the monitor light wavelength can approach the maximum value by heating the VIPA.

Moreover, because the filter characteristic of the monitor light wavelength is about identical to the filter characteristic of the wavelength used, the optical level of the wavelength used can approach the maximum value by heating the VIPA.

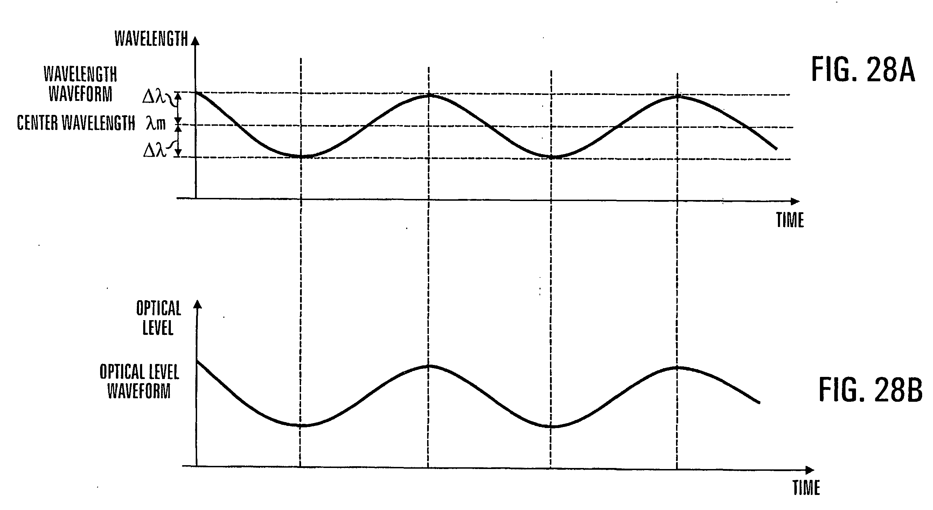

FIG. 28A is identical to FIG. 26A and illustrates the wavelength waveform. FIG. 28B is an optical level waveform in which the optical level does not show the maximum value in the course of wavelength change. In FIG. 28B, the optical level increases as the wavelength increases and decreases as the wavelength decreases. That is, the phases of the wavelength waveform and the optical level waveform match each other.

Because the optical level waveform indicates a characteristic similar to the filter characteristic of FIG. 25C, the filter characteristic can be approximated to the filter characteristic of FIG. 25A by heat radiation of the VIPA, as illustrated in FIG. 10.

As described above, it can be understood that when the period of the optical level waveform is not equal to about twice the period of the wavelength waveform and the phases of these waveforms approximately match each other, the optical level in the monitor light wavelength can approximate the maximum value by heat radiation of the VIPA.

Because the filter characteristic in the monitor light wavelength is about identical to the filter characteristic in the wavelength used, the optical level in the wavelength used can approximate the maximum value by heat radiation of the VIPA.

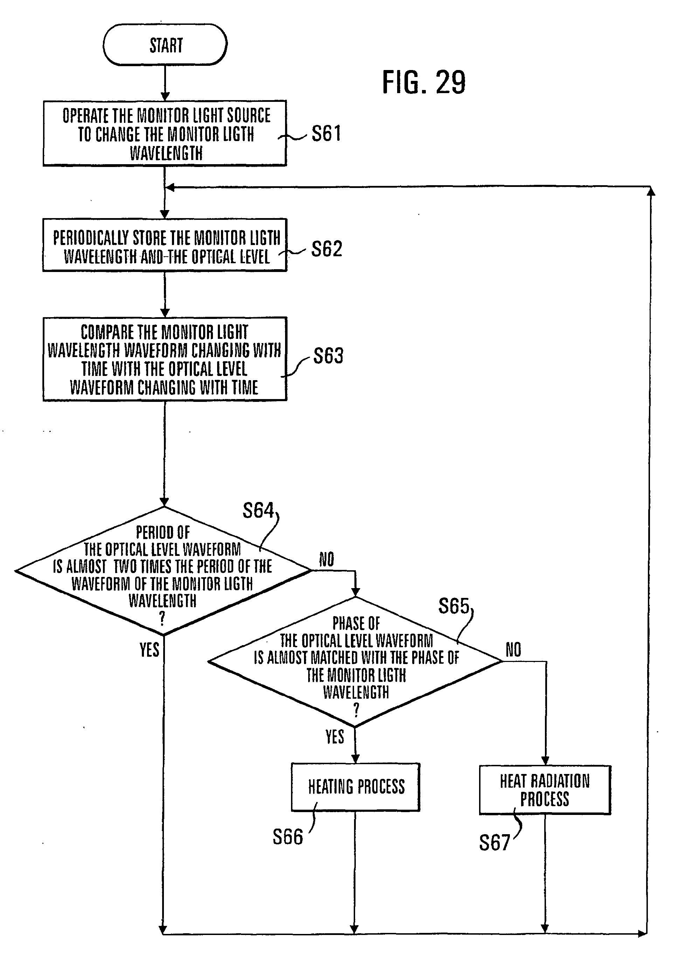

FIG. 29 is a flowchart showing the flow of control for the eighth embodiment of the present invention.

First, the monitor light source 202 is operated to change the monitor light wavelength in a certain time period at operation S61.

The temperature controlling circuit 20 sequentially stores the wavelength data of the monitor light from the monitor light information inputting terminal 43 and the optical data from the level monitor 22, to the memory 23 in a time period shorter than the time period of the wavelength change, at operation S62.

Next, the temperature controlling circuit 20 obtains the wavelength waveform and the optical level waveform from the wavelength data and the optical level data, which have been stored sequentially, and then compares these waveforms with each other at operation S63.

The temperature controlling circuit 20 determines whether the period of the optical level waveform is about identical to twice the period of the wavelength waveform at operation S64.

When the period is about twice the period of the wavelength waveform, control returns to operation S62.

When the period is not about twice the period of the wavelength waveform, it is determined whether the phase of the optical level waveform about matches with the phase of the wavelength waveform at operation S65.

When the phases approximately match each other, the heater 13 is controlled to heat the VIPA at operation S66.

Thereafter, control returns to operation S62.

When the phases do not approximately match each other, the heater 13 is controlled for heat radiation of the VIPA at operation S67.

Thereafter, control returns to operation S62.

With the processes described above, the optical level of the monitor light can be maintained at approximately the maximum value. That is, when the necessary chromatic dispersion value is generated in the particular wavelength used, loss can be reduced almost to the minimum value in the VIPA-type chromatic dispersion compensating module 11.

Moreover, because the lights of other wavelengths are provided in the eighth embodiment, the optical level of the output light of the wavelength used can be increased compared to branching the light of the wavelength used for monitoring purposes.

FIG. 23 is also used to illustrate the basic structure of the chromatic dispersion compensating apparatus according to a ninth embodiment of the present invention. The structure is identical to that of the eighth embodiment of the present invention described above.

FIG. 24 is also used as a second diagram for describing the ninth embodiment and is configured identically to that of the eighth embodiment. In FIG. 24, the monitor light source 202 periodically generates lights having two different wavelengths λm1 and λm2. Information indicating the output wavelength is provided to the temperature controlling circuit 20 via the monitor light information inputting terminal 43.

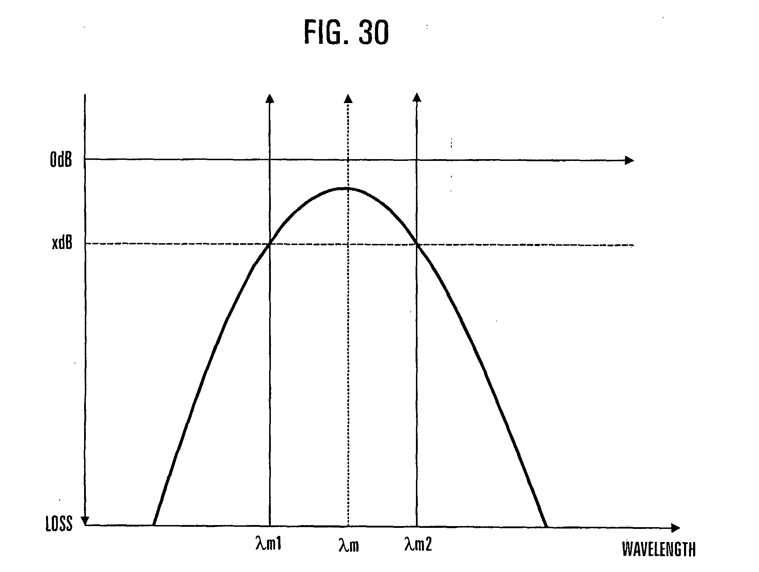

FIG. 30 illustrates an example of the waveform of the monitor light source 202 with wavelengths λm1 and λm2.

In FIG. 30, λm generates an angular dispersion that is identical to the angular dispersion generated by the wavelength used with the VIPA-DCM 11. The filter characteristic that shows the minimum loss in the wavelength λm is indicated in FIG. 30.

In this filter characteristic shown in FIG. 30, the wavelengths λm1 and λm2, which provide almost equal loss, are selected as the wavelengths generated by the monitor light source 202. the wavelength λm1 is on the shorter wavelength side of the wavelength λm and the wavelength λm2 is on the longer wavelength side of λm.

Here, the method of controlling the motor 12 to obtain the predetermined chromatic dispersion value is similar to that described above for the first embodiment of the present invention and it is assumed that the motor 12 has already been controlled with the motor controlling circuit 15 to obtain the predetermined chromatic dispersion value in the predetermined wavelength.

The memory 23 of FIG. 23 previously stores the allowable value L0 of the difference between the measured value of the optical level in the wavelength λm1 and the measured value of the optical level in the wavelength λm2.

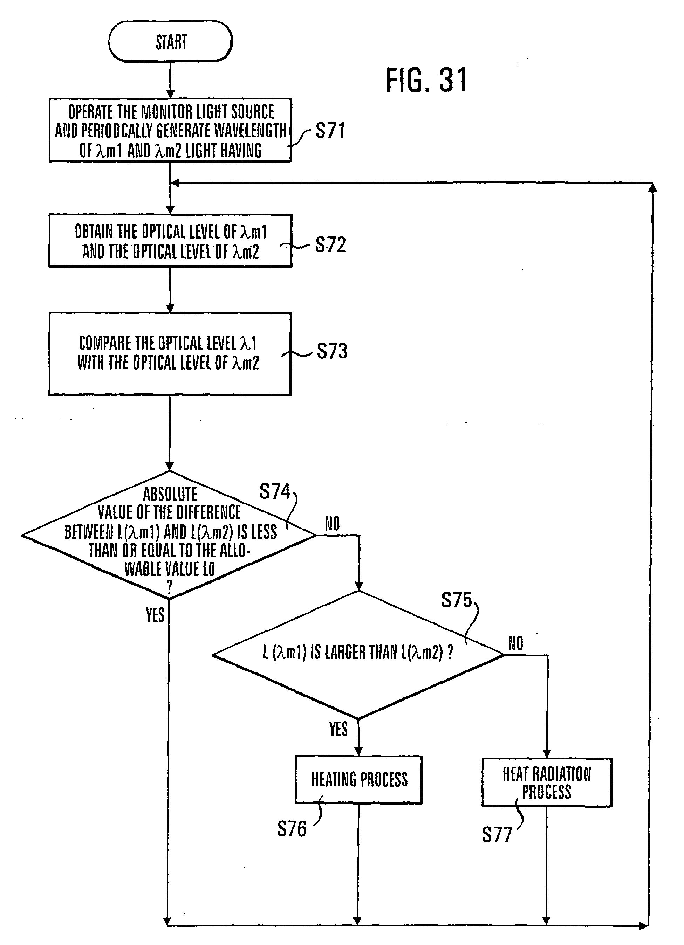

FIG. 31 is a flowchart illustrating the flow of control in the ninth embodiment of the present invention.

At operation S71, the monitor light source 202 periodically generates light having wavelengths λm1 and λm2.

The temperature controlling circuit 20 obtains the wavelength data of the monitor light from the monitor light information inputting terminal 43 and the optical level data from the level monitor 22 at operation S72.

Next, the temperature controlling circuit 20 compares the optical level L ($\lambda$m1) of the wavelength $\lambda$m1 with the optical level L ($\lambda$m2) of the wavelength $\lambda$m2 at operation S73.

The temperature controlling circuit 20 determines whether the absolute value of the difference between L ($\lambda$m1 ) and L ($\lambda$m2) is less than or equal to the allowable value L0 stored in the memory 23 at operation S74.

When the absolute value of the difference between L ($\lambda$m1 ) and L ($\lambda$m2) is less than or equal to the allowable value L0, control returns to operation S72.

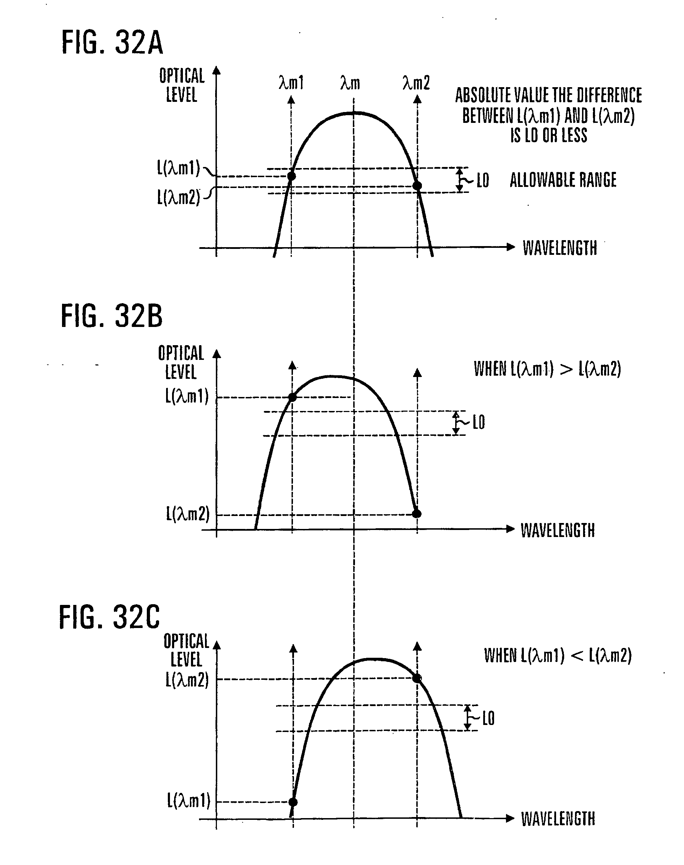

The above process means, as illustrated in FIG. 32A, that $\lambda$m is in the proximity of the minimum value of loss and that the current temperature of the VIPA is appropriate.

When the absolute value of the difference between L ($\lambda$m1 ) and L ($\lambda$m2) is not less than or equal to the allowable value L0, it is determined that any one of L($\lambda$m1 ) and L ($\lambda$m2) is larger at operation S75.

When L ($\lambda$m1 ) is larger than L ($\lambda$m2), the temperature controlling circuit heats the VIPA at operation S76.

Thereafter, control returns to operation S72.

The above process indicates, as illustrated in FIG. 32B that the minimum value of loss of the filter characteristic deviates on the shorter wavelength side and that the minimum value of loss of the filter characteristic can approach $\lambda$m by heating the VIPA, as illustrated in FIG. 10.

When L ($\lambda$m1 ) is not larger than L ($\lambda$m2) at operation S75, the temperature controlling circuit 20 controls the VIPA to radiate heat at operation S77.

Then, control returns to operation S72.

The above process indicates that the minimum value of loss of the filter characteristic deviates on the longer wavelength side, as illustrated in FIG. 32C, and that the minimum value of loss of the filter characteristic can approach $\lambda$m when the VIPA radiates heat, as illustrated in FIG. 10.

With the process described above, the optical level of the wavelength $\lambda$m can be maintained at about the maximum value. That is, when the necessary chromatic dispersion value in the particular wavelength used is generated, loss can be reduced to about the minimum value in the VIPA- type chromatic dispersion compensating module 11.

Moreover, because the light of the other wavelength is also prepared for monitoring in the ninth embodiment, the optical level of output light of the wavelength used is higher than that when the light of the wavelength used is branched for monitoring purposes.

The monitor light source 202 periodically generates light having wavelengths of $\lambda$m1 and $\lambda$m2, but a similar effect can also be attained with a similar control, even when the light sources for generating the wavelengths $\lambda$m1 and $\lambda$m2 are provided individually.

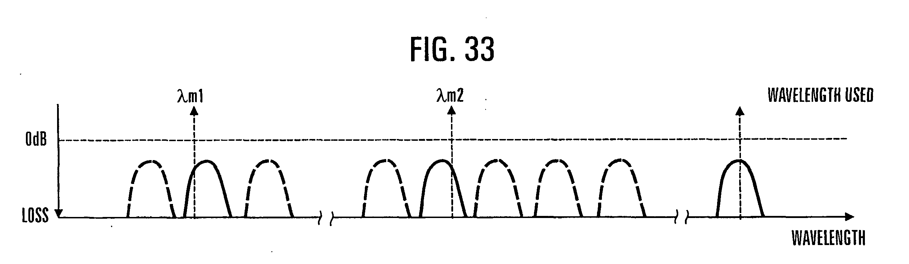

FIG. 33 illustrates an example of the selection of $\lambda$m1 and $\lambda$m2. In FIG. 33, the fitter characteristics ($\lambda$m1 ) and ($\lambda$m2) correspond to different wavelengths with the angular dispersion generated with the VIPA-DCM 11 considered to be identical. Because the shapes of the curves are almost identical, these filter characteristics can provide almost identical effects through the control process described above, even when the wavelength $\lambda$m1 is selected from the filter characteristic (1 ) and the wavelength $\lambda$m2 is selected from the filter characteristic (2).

Although a few embodiments of the present invention have been shown and described, it will be appreciated by those skilled in the art that changes may be made in these embodiments without departing from the principles and spirit of the invention, the scope of which is defined in the claims and their equivalents.

**Claims**

1. A chromatic dispersion compensating apparatus, comprising:

   a chromatic dispersion compensating module having a spectral unit receiving an input light and generating an output light having a predetermined wavelength, a light returning unit designed for the predetermined wavelength to return the output light to the spectral unit, and a position changing unit changing a relative position between the spectral unit and the light returning unit;
   a storing unit storing predetermined position controlling amounts of the position changing unit, the position controlling amounts being used to generate a chromatic dispersion value for a certain wavelength; and
   a position controlling unit operating the position changing unit based on one of the position controlling amounts in the storing unit corresponding to the predetermined wavelength of the output light and the chromatic dispersion value to thereby change the relative position between the spectral unit and the light returning unit in accordance with said one of the position controlling amounts.

2. The chromatic dispersion compensating apparatus of claim 1, wherein the position controlling unit comprises an arithmetic unit calculating the position controlling amount obtained from the storing unit.

3. The chromatic dispersion compensating apparatus of claim 1, wherein the storing unit stores predetermined temperatures of the spectral unit.

4. The chromatic dispersion compensating apparatus of claim 3, further comprising:

   a heating unit heating the spectral unit;
   a temperature detecting unit detecting a temperature of the spectral unit; and
   a temperature controlling unit controlling the heating unit based on one of the temperatures stored in the storing unit corresponding to the predetermined wavelength of the output light and the chromatic dispersion value to reduce signal loss.

5. The chromatic dispersion compensating apparatus of claim 1, further comprising:

   a heating unit heating the spectral unit;
   a light branching unit branching the output light output from the spectral unit;
   a light intensity measuring unit measuring an intensity of the branched output light; and
   a temperature controlling unit controlling the heating unit to provide a maximum light intensity as measured by the light intensity measuring unit.

6. The chromatic dispersion compensating apparatus of claim 5, further comprising:

   a temperature detecting unit detecting a temperature of the spectral unit; and
   a temperature storing unit storing the temperature of the spectral unit when the temperature of the spectral unit changes due to the temperature controlling unit and the light intensity obtained from the light intensity measuring unit increases up to approximately the maximum value.

7. The chromatic dispersion compensating apparatus of claim 1, wherein the spectral unit generates the output light having a signal light with a first wavelength and a monitor light with a second wavelength and an angular dispersion the same as that of the signal light.

8. The chromatic dispersion compensating apparatus of claim 7, further comprising:

   a heating unit heating the spectral unit;
   a light extracting unit extracting the monitor light;
   a light intensity measuring unit measuring an intensity of the extracted light; and
   a temperature controlling unit controlling the heating unit to provide an approximately maximum light intensity as measured by the light intensity measuring unit.

9. The chromatic dispersion compensating apparatus of claim 1, wherein the spectral unit has a virtually imaged phased array (VIPA) with a plurality of passage areas for receiving and outputting light, receives the input light having a plurality of continuous wavelengths within the passage areas, and performs multiple reflections of the input light to form, through self-interference, output light comprising component lights that are spatially distinguished from one another, and thereby disperses the output light at different output angles, depending on each constituent wavelength, in a substantially linear dispersing direction.

10. The chromatic dispersion compensating apparatus of claim 9, further comprising:

   a light returning unit comprising a lens focusing the output light formed with the VIPA and a mirror that returns the focused output light to the lens through reflection and causes the lens to return the reflected output light to the VIPA, thereby outputting the reflected output light from the VIPA via the passage areas by multiple reflections within the VIPA, and forming in a shape that provides an approximately constant wavelength dispersion to the output light from the VIPA independent of each constituent wavelength for the angular dispersion direction of the VIPA, and provides different wavelengths in a substantially perpendicular direction to the angular dispersion direction of the VIPA.

11. The chromatic dispersion compensating apparatus of claim 1, wherein the spectral unit generates the output light having a signal light with a first wavelength and a monitor light with a second wavelength having an angular dispersion the same as that of the signal light, wherein the wavelength of the monitor light is changeable.

12. The chromatic dispersion compensating apparatus of claim 11, further comprising:

   a heating unit heating the spectral unit;
   a light extracting unit extracting the monitor light;
   a light intensity measuring unit measuring an intensity of the extracted light; and
   a temperature controlling unit controlling the heating unit to control temperature according to a change in the intensity of the extracted light when the second wavelength of the monitor light is changed within a wavelength band containing the second wavelength.

**13.** The chromatic dispersion compensating apparatus of claim 7, wherein the monitor light comprises lights having a plurality of different wavelengths.

**14.** A controlling method of a chromatic dispersion compensating apparatus comprising a chromatic dispersion compensating module having a spectral unit receiving an input light and generating an output light having a predetermined wavelength, a light returning unit designed for the predetermined wavelength to return the output light to the spectral unit, and a position changing unit changing a relative position between the spectral unit and the light returning unit, the controlling method comprising:

designating the predetermined wavelength of the output light and a chromatic dispersion value;

obtaining a controlling amount of the position changing unit corresponding to the designated wavelength and the designated chromatic dispersion value; and

operating the position changing unit based on the obtained controlling amount to thereby change the relative position between the spectral unit and the light returning unit in accordance with the controlling amount.

**15.** The controlling method of the chromatic dispersion compensating module of claim 14, further comprising:

calculating the controlling amount of the position changing unit corresponding to the designated wavelength and the designated chromatic dispersion value after said designating the predetermined wavelength and the chromatic dispersion value and before said obtaining the controlling amount corresponding to the designated wavelength and the designated chromatic dispersion value.

**16.** The controlling method of the chromatic dispersion compensating module of claim 14 further comprising:

storing, after said operating the position changing unit based on the obtained controlling amount, both an initial value of a temperature of the spectral unit and an initial value of an optical level as a temperature storing value and an optical level storing value, respectively;

heating the spectral unit through a heating process and storing an indicator of the heating process as a heating condition storing value;

determining whether a measured value of the optical level is greater than the stored optical level;

storing, respectively, both a measured value of temperature and the measured value of the optical level as a new temperature storing value and a new optical level storing value when the measured value of the optical value is greater than the stored optical level;

determining whether the heating condition storing value indicates the heating process;

heating, when the heating condition storing value indicates the heating process, the said spectral unit and storing the indicator of the heating process as the heating condition storing value and then repeating said determining whether a measured value of the optical level is greater than the stored optical level;

radiating the heat of the spectral unit through a heat radiating process and storing an indicator of the heat radiating process as the new heating condition storing value when the heating condition storing value does not indicate the heating process, and then repeating said determing whether a measured value of the optical level is greater than the stored optical level;

determining whether the heating condition storing value indicates the heating process when the measured value of the optical level is not greater than the stored optical level;

radiating, when the measured value of the optical value is greater than the stored optical level, the heat of the spectral unit and storing the indicator of the heat radiating process as the heating condition storing value, and then repeating said determining whether a measured value of the optical level is greater than the stored optical level; and

heating, when the heating condition storing value does not indicate the heating process, the spectral unit and storing the indicator of the heating process as the heating condition storing value, and then repeating said determining whether a measured value of the optical level is greater than the stored optical level.

**17.** The controlling method of the chromatic dispersion compensating module of claim 14, further comprising:

storing, after said operating the position changing unit based on the obtained controlling amount, an initial value of a temperature of the spectral unit as a first temperature storing value;

changing periodically the temperature of the spectral unit within a certain temperature range about the first temperature storing value;

storing periodically a measured value of the temperature and a measured value of the optical level;

comparing a temperature waveform changing with time based on the stored measured value of temperature and the optical level waveform changing with time based on the stored measured value of optical level;

determining whether a period of the optical level waveform changing with time is equal to twice a the period of the temperature waveform changing with time;

repeating said changing periodically the temperature of the spectral unit when the period of the optical level waveform is twice the period of the temperature waveform;

determining whether a phase of the optical level waveform changing with time matches a phase of the temperature waveform changing with time when the period of the optical level waveform is not twice the period of the temperature waveform;

storing a maximum temperature among the stored measured values of the temperature as a first temperature storing value and repeating said changing periodically the temperature of the spectral unit when the phase of the optical level waveform matches the phase of the temperature waveform; and

storing a minimum temperature among the stored measured values of the temperature as the first temperature storing value and then repeating said changing periodically the temperature of the spectral unit when the phase of the optical level waveform does not match the phase of the temperature waveform.

18. A chromatic dispersion compensating module using a virtually imaged phased array (VIPA) that compensates for an error of a chromatic dispersion value generated depending on a predetermined wavelength based on previously stored information, and provides a minimum signal loss at the predetermined wavelength and the chromatic dispersion value.

19. A chromatic dispersion compensating apparatus, comprising:

a chromatic dispersion compensating module having a spectral unit receiving an input light and generating an output light having a predetermined wavelength;

a storing unit storing predetermined wavelengths used and predetermined chromatic dispersion values and temperatures of the spectral unit corresponding to the predetermined wavelengths used;

a heating unit heating the spectral unit;

a temperature detecting unit detecting a temperature of the spectral unit; and

a temperature controlling unit controlling the heating unit based on one of the temperatures stored in the storing unit that corresponds to the predetermined wavelength of the output light and the chromatic dispersion value to reduce signal loss, to thereby maintain the spectral unit at a constant temperature and stabilize a chromatic dispersion value generated by the spectral unit.

20. A chromatic dispersion compensating apparatus, comprising:

a chromatic dispersion compensating module having a spectral unit receiving an input light and generating an output light having a predetermined wavelength;

a storing unit storing predetermined wavelengths used and predetermined chromatic dispersion values and temperatures of the spectral unit corresponding to the predetermined wavelengths used;

a heating unit heating the spectral unit;

a light branching unit branching the output light from the spectral unit;

a light intensity measuring unit measuring an intensity of the branched output light;

a temperature detecting unit detecting a temperature of the spectral unit; and

a temperature controlling unit controlling the heating unit based on one of the temperatures stored in the storing unit that corresponds to the predetermined wavelength of the output light and the chromatic dispersion value to provide a maximum light intensity of the output light, thereby maintaining the spectral unit at a constant temperature and stabilizing a chromatic dispersion value generated by the spectral unit.

21. A chromatic dispersion compensating apparatus, comprising:

a monitor light source generating a monitor light;

a chromatic dispersion compensating module having a spectral unit receiving an input light and the monitor light and generating an output light having a signal light with a first wavelength and the monitor light with a second wavelength, the monitor light having an angular dispersion the same as that of the signal light;

a heating unit heating the spectral unit;

a light extracting unit extracting the monitor light from the output light;

a light intensity measuring unit measuring an intensity of the extracted monitor light; and

a temperature controlling unit controlling the heating unit to provide a maximum light intensity of the monitor light, thereby maintaining the spectral unit at a constant temperature and stabilizing a chromatic dispersion value generated by the spectral unit.

**22.** A chromatic dispersion compensating apparatus, comprising:

a spectral unit receiving an input light and generating an output light having a predetermined wavelength;
a light returning unit designed for the predetermined wavelength to return the output light to the spectral unit, the light returning unit and the spectral unit operating together to produce chromatic dispersion; and
a controller changing the relative position between the spectral unit and the light returning unit based on a predetermined position controlling amount and a predetermined chromatic dispersion value corresponding to the predetermined wavelength.

**23.** The chromatic dispersion compensating apparatus of claim 22, wherein the spectral unit is a virtually imaged phased array (VIPA).

**24.** A chromatic dispersion compensating apparatus, comprising:

spectral means for receiving an input light and generating an output light having a predetermined wavelength; light returning means for returning the output light to the spectral means, the light returning means and the spectral means operating together to produce chromatic dispersion; and means for changing the relative position between the spectral means and the light returning means based on a predetermined position controlling amount and a predetermined chromatic dispersion value corresponding to the predetermined wavelength.

**25.** The chromatic dispersion compensating apparatus of claim 24, wherein the spectral means is a virtually imaged phased array (VIPA).

**26.** A chromatic dispersion compensating apparatus, comprising:

a spectral unit receiving an input light and generating an output light having a predetermined wavelength;
a heating unit heating the spectral unit; and
a controller controlling the heating unit based on a detected temperature of the spectral unit that corresponds to the predetermined wavelength, to thereby maintain the spectral unit at a constant temperature and stabilize a chromatic dispersion value generated by the spectral unit.

**27.** The chromatic dispersion compensating apparatus of claim 26, wherein the spectral unit is a virtually imaged phased array (VIPA).

**28.** A chromatic dispersion compensating apparatus, comprising:

spectral means for receiving an input light and generating an output light having a predetermined wavelength;
heating means for heating the spectral unit; and
means for controlling the heating means based on a detected temperature of the spectral means that corresponds to the predetermined wavelength, to thereby maintain the spectral means at a constant temperature and stabilize a chromatic dispersion value generated by the spectral means.

**29.** The chromatic dispersion compensating apparatus of claim 28, wherein the spectral means is a virtually imaged phased array (VIPA).

FIG. 1
(PRIOR ART)

EP 1 398 895 A2

# FIG. 2

MOTOR CONTROLLING AMOUNT

x

y

z

(b) USED IN THE DESIGN WAVELENGTH

(c) USED IN THE SHORT WAVELENGTH

(a) USED IN THE LONG WAVELENGTH

0 ps/nm

MAXIMUM VALUE OF THE NEGATIVE DISPERSION

MAXIMUM VALUE OF THE POSITIVE DISPERSION

CHROMATIC DISPERSION VALUE

EP 1 398 895 A2

# FIG. 3

WAVELENGTH USED

0dB

(b)
MAXIMUM VALUE OF
THE NEGATIVE DISPERSION

(c)
MAXIMUM VALUE OF
THE POSITIVE DISPERSION

(a) 0ps/nm

LOSS

WAVELENGTH

EP 1 398 895 A2

FIG. 4

# FIG. 5

INPUT LIGHT →

a

CIRCULATOR — b →
←

c

OUTPUT LIGHT ←

VIPA-DCM

HEATER    MOTOR

NON-VOLATILE MEMORY →

MOTOR CONTROLLING CIRCUIT

WAVELENGTH AND
DISPERSION VALUE
INFORMATION ←

EP 1 398 895 A2

# FIG. 6

INPUT LIGHT BEAM

OUTPUT LIGHT

1 2 3 4 5 6 13 7 X Y 12

TEMPERATURE CONTROLLING CIRCUIT 20

MOTOR CONTROLLING CIRCUIT 15

EP 1 398 895 A2

| WAVELENGTH USED (nm) | CHROMATIC DISPERSION VALUE (ps/nm) | MOTOR CONTROLLING AMOUNT (PULSE) |
|---|---|---|
| 1567.440 | -2000 | 5000 |
| | -1990 | 4992 |
| | .... | .... |
| | +2000 | 2000 |
| 1566.211 | -2000 | 5002 |
| | -1990 | 4994 |
| | .... | .... |
| | +2000 | 1998 |
| .... | .... | .... |
| 1534.937 | -2000 | 5002 |
| | -1990 | 4984 |
| | .... | .... |
| | +2000 | 1988 |

FIG. 7

EP 1 398 895 A2

# FIG. 8

INPUT LIGHT →

OUTPUT LIGHT ←

16

17

102

CIRCULATOR

a

b

c

1

VIPA-DCM

TEMPERATURE SENSOR

19

HEATER

13

MOTOR

12

11

NON-VOLATILE MEMORY

14

TEMPERATURE CONTROLLING CIRCUIT

20

MOTOR CONTROLLING CIRCUIT

15

WAVELENGTH AND DISPERSION VALUE INFORMATION

18

EP 1 398 895 A2

27

# FIG. 9

EP 1 398 895 A2

INPUT LIGHT

OUTPUT LIGHT

1

2

3

4

5

6

7

X

Y

19

13

12

TEMPERATURE CONTROLLING CIRCUIT

20

MOTOR CONTROLLING CIRCUIT

15

FIG. 10

## FIG. 11

| WAVELENGTH USED (nm) | DISPERSION VALUE (ps/nm) | MOTOR CONTROLLING AMOUNT (PULSE) | TEMPERATURE (°C) |
|---|---|---|---|
| 1567.440 | -2000 | 5000 | 79.3 |
| | -1990 | 4992 | 79.2 |
| | .... | .... | .... |
| | +2000 | 2000 | 75.2 |
| 1566.211 | -2000 | 5002 | 79.2 |
| | -1990 | 4994 | 79.1 |
| | .... | .... | .... |
| | +2000 | 1998 | 75.1 |
| .... | .... | .... | .... |
| 1534.937 | -2000 | 5002 | 78.3 |
| | -1990 | 4984 | 78.2 |
| | .... | .... | .... |
| | +2000 | 1988 | 75.0 |

EP 1 398 895 A2

FIG. 12

INPUT LIGTH

OUTPUT LIGTH

103

16

17

a

1 CIRCULATOR

b

c

21 OPTICAL DISTRIBUTOR

22 LEVEL MONITOR

11 VIPA-DCM

19 TEMPERATURE SENSOR

13 HEATER

12 MOTOR

23 MEMORY

TEMPERATURE CONTROLLING CIRCUIT

20 NON-VOLATILE MEMORY

14

15 MOTOR CONTROLLING CIRCUIT

18

WAVELENGTH AND DISPERSION VALUE INFORMATION

31

## FIG. 13

START

STORE THE INITIAL VALUE OF TEMPERATURE AND INITIAL VALUE OF OPTICAL LEVEL — S31

PERFORM THE HEATING PROCESS AND STORE THE HEATING PROCESS DATA — S32

S33 — IS THE MEASURED VALUE OF OPTICAL LEVEL HIGHER THAN THE STORED VALUE ?

NO

YES

S34 — STORE THE MEASURED VALUE OF THE OPTICAL LEVEL AND THE CORRESPONDING TEMPERATURE

S35 — DURING THE HEATING PROCESS ?

NO

YES

S36 — PERFORM THE HEAT PROCESSING AND STORE THE HEATING PROCESS DATA

S37 — PERFORM THE HEAT RADIATION PROCESS AND STORE THE HEAT RADIATION PROCESS DATA

S38 — HEATING PROCESS ?

NO

YES

S39 — PERFORM THE HEATING RADIATION PROCESS AND STORE THE HEAT RADIATION PROCESS DATA

S40 — PERFORM THE HEATING PROCESSING AND STORE THE HEATING PROCESS DATA

TEMPERATURE

TEMPERATURE
WAVEFORM

CENTER TEMPERATURE

FIG. 14A

TIME

OPTICAL
LEVEL

OPTICAL
LEVEL
WAVEFORM

FIG. 14B

TIME

EP 1 398 895 A2

33

EP 1 398 895 A2

TEMPERATURE

TEMPERATURE
WAVEFORM

$\Delta t$

CENTER TEMPERATURE    t0

$\Delta t$

TIME

FIG. 15A

OPTICAL
LEVEL

OPTICAL
LEVEL
WAVEFORM

TIME

FIG. 15B

TEMPERATURE

TEMPERATURE
WAVEFORM

CENTER TEMPERATURE

$\Delta t$

t0

$\Delta t$

FIG. 16A

TIME

OPTICAL
LEVEL

OPTICAL
LEVEL
WAVEFORM

FIG. 16B

TIME

EP 1 398 895 A2

## FIG. 17

START

STORE THE INITIAL VALUE OF CENTER TEMPERATURE AS THE CENTER TEMPERATURE — S51

PERIODICALLY CHANGE THE TEMPERATURE AS THE CENTER TEMPERATURE — S52

PERIODICALLY STORE THE TEMPERATURE AND OPTICAL LEVEL — S53

COMPARE THE TEMPERATURE WAVEFORM CHANGING WITH TIME THE OPTICAL LEVEL WAVEFORM CHANGING WITH TIME — S54

PERIOD OF THE OPTICAL LEVEL WAVEFORM IS ALMOST EQUAL TO TWO TIMES THE PERIOD OF THE TEMPERATURE WAVEFORM ? — S55

YES

NO

PHASE OF THE OPTICAL LEVEL WAVEFORM APPROXIMATELY MATCHES THE PHASE OF THE TEMPERATURE WAVEFORM ? — S56

YES

NO

STORE THE MAXIMUM VALUE OF THE STORED TEMPERATURE AS THE CENTER TEMPERATURE — S57

STORE THE MINIMUM VALUE OF THE STORED TEMPERATURE AS THE CENTER TEMPERATURE — S58

# FIG. 18

INPUT LIGHT →

104

16    44    MULTI-PLEXER    a    1    CIRCULATOR    b

201    MONITOR LIGHT SOURCE →

42

c

41    DEMULTI-PLEXER

23    MEMORY

22    LEVEL MONITOR

OUTPUT LIGHT ←

17

11    VIPA-DCM    19    TEMPERATURE SENSOR    13    HEATER    12    MOTOR

TEMPERATURE CONTROLLING CIRCUIT    20

NON-VOLATILE MEMORY →    MOTOR CONTROLLING CIRCUIT

14    15    18

WAVEFORM AND DISPERSION VALUE INFORMATION

EP 1 398 895 A2

37

# FIG. 19

# FIG. 20

EP 1 398 895 A2

# FIG. 21

## FIG. 22

$\lambda 1$
SIGNAL LIGTH

104(1)
16
42
$\lambda m \rightarrow$
OUTPUT LIGTH
17
$\lambda 1$

$\lambda 2$
SIGNAL LIGTH

104(2)
16
42
$\lambda m \rightarrow$
OUTPUT LIGTH
17
$\lambda 2$

$\lambda n$
SIGNAL LIGTH

104(n)
16
42
$\lambda m \rightarrow$
OUTPUT LIGTH $\lambda n$
17

51 OPTICAL DISTRIBUTOR

$\uparrow \lambda m$

201 MONITOR LIGHT SOURCE

# FIG. 23

INPUT LIGTH
MULTIPLEXER **44**
a
CIRCULATOR **1**
b
**16**
**42**

MONITOR LIGTH

OUTPUT LIGTH
**17**

c
DEMULTI-PLEXER **41**
MEMORY **23**
**20**

VIPA-DCM **11**
TEMPERATURE SENSOR **19**
HEATER **13**
MOTOR **12**

TEMPERATURE CONTROLLING CIRCUIT

LEVEL MONITOR **22**

NON-VOLATILE MEMORY **14**
MOTOR CONTROLLING CIRCUIT **15**
**18**
WAVELENGTH AND DISPERSION VALUE INFORMATION

MONITOR LIGTH INFORMATION
**43**

**105**

EP 1 398 895 A2

42

EP 1 398 895 A2

FIG. 25

**FIG. 26A**

WAVELENGTH

WAVELENGTH WAVEFORM

CENTER WAVELENGTH $\lambda m$

$\Delta\lambda$

$\Delta\lambda$

TIME

**FIG. 26B**

OPTICAL LEVEL

OPTICAL LEVEL WAVEFORM

TIME

FIG. 27A

WAVELENGTH

WAVELENGTH WAVEFORM

CENTER WAVELENGTH $\lambda_m$

$\Delta\lambda$

$\Delta\lambda$

TIME

FIG. 27B

OPTICAL LEVEL

OPTICAL LEVEL WAVEFORM

TIME

WAVELENGTH

WAVELENGTH WAVEFORM

CENTER WAVELENGTH $\lambda m$

$\Delta\lambda$

$\Delta\lambda$

TIME

FIG. 28A

OPTICAL LEVEL

OPTICAL LEVEL WAVEFORM

TIME

FIG. 28B

EP 1 398 895 A2

**FIG. 29**

START

↓

OPERATE THE MONITOR LIGHT SOURCE TO CHANGE THE MONITOR LIGTH WAVELENGTH — S61

↓

PERIODICALLY STORE THE MONITOR LIGTH WAVELENGTH AND THE OPTICAL LEVEL — S62

↓

COMPARE THE MONITOR LIGHT WAVELENGTH WAVEFORM CHANGING WITH TIME WITH THE OPTICAL LEVEL WAVEFORM CHANGING WITH TIME — S63

↓

S64 — PERIOD OF THE OPTICAL LEVEL WAVEFORM IS ALMOST TWO TIMES THE PERIOD OF THE WAVEFORM OF THE MONITOR LIGTH WAVELENGTH ?

NO →

S65 — PHASE OF THE OPTICAL LEVEL WAVEFORM IS ALMOST MATCHED WITH THE PHASE OF THE MONITOR LIGTH WAVELENGTH ?

NO →

YES ↓ HEATING PROCESS S66

YES ↓ HEAT RADIATION PROCESS S67

48

FIG. 30

**FIG. 31**

```
                    ┌─────────┐
                    │  START  │
                    └────┬────┘
                         │
    ┌────────────────────────────────────────┐
    │ OPERATE THE MONITOR LIGHT SOURCE        │
    │ AND PERIODCALLY GENERATE WAVELENGTH     │──── S71
    │ OF λm1 AND λm2 LIGHT HAVING             │
    └────────────────────┬───────────────────┘
                         │
    ┌────────────────────────────────────────┐
    │ OBTAIN THE OPTICAL LEVEL OF λm1         │──── S72
    │ AND THE OPTICAL LEVEL OF λm2            │
    └────────────────────┬───────────────────┘
                         │
    ┌────────────────────────────────────────┐
    │ COMPARE THE OPTICAL LEVEL λ1            │──── S73
    │ WITH THE OPTICAL LEVEL OF λm2           │
    └────────────────────┬───────────────────┘
```

ABSOLUTE VALUE OF THE DIFFERENCE BETWEEN L(λm1) AND L(λm2) IS LESS THAN OR EQUAL TO THE ALLOWABLE VALUE L0 ? — S74

NO

L (λm1) IS LARGER THAN L(λm2) ? — S75

NO

YES

YES

HEATING PROCESS — S76

HEAT RADIATION PROCESS — S77

# FIG. 32A

OPTICAL LEVEL

λm1   λm   λm2

ABSOLUTE VALUE THE DIFFERENCE
BETWEEN L(λm1) AND L(λm2)
IS L0 OR LESS

L(λm1)

L(λm2)

L0   ALLOWABLE RANGE

WAVELENGTH

# FIG. 32B

OPTICAL LEVEL

WHEN L(λm1) > L(λm2)

L(λm1)

L0

L(λm2)

WAVELENGTH

# FIG. 32C

OPTICAL LEVEL

WHEN L(λm1) < L(λm2)

L(λm2)

L0

L(λm1)

WAVELENGTH

FIG. 33